# EUROPEAN PATENT APPLICATION

(11) **EP 4 796 245 A1**
(43) Date of publication of application: **26.08.2026**
(21) Application number: 24879476.0
(22) Date of filing: 13.09.2024
(51) Int. Cl.: B22D 19/00, B22C 9/06, B22C 9/10

(54) **DIE, CAST PRODUCT MANUFACTURING DEVICE, CAST PRODUCT MANUFACTURING METHOD, AND CAST PRODUCT**

(30) Priority: 16.10.2023 JP 2023177958; 10.04.2024 JP 2024063338
(71) Applicant: Kabushiki Kaisha F.C.C., Hamamatsu-shi, Shizuoka 431-1394 (JP)
(72) Inventor: ONIBUCHI Kensuke, Hamamatsu-shi, Shizuoka 431-1394 (JP); KURITA Yukinori, Hamamatsu-shi, Shizuoka 431-1394 (JP); MIMURO Takayoshi, Hamamatsu-shi, Shizuoka 431-1394 (JP)
(74) Representative: Grünecker Patent- und Rechtsanwälte PartG mbB
(86) International application number: PCT/JP2024/032937
(87) International publication number: WO 2025/084049

(57) **Abstract**

A mold 20 includes a mold body 25 including a fixed mold 30 and a movable mold 40 movable toward, or away from, the fixed mold 30; a molding space 60 defined by the fixed mold 30 and the movable mold 40 and allowing a pipe 100 to be placed therein; an injection opening 65 through which a molten metal material 120 is allowed to be injected into the molding space 60; a holding portion 42 holding both of two ends of the pipe 100; and a suppressing member 70 suppressing movement of the pipe 100 in the molding space 60 when the molten metal material 120 is injected into the molding space 60.

## Description

### Technical Field

The present invention relates to a mold, a cast item production device, a method for producing a cast item, and a cast item.

### Background Art

A method called "insert molding" is conventionally used for producing a cast item. For example, a cast item produced by insert molding includes a pipe (e.g., a hollow pipe), produced in advance separately from the casting of the cast item, incorporated thereto. In more detail, according to the insert molding, a hollows pipe is installed in advance in a mold for producing a cast item, and then a molten metal material, which is a metal material such as aluminum alloy or the like that is melted, is poured into the mold. As a result, the cast item including the hollow pipe incorporated thereto is produced. An example of such a cast item including a hollow pipe incorporated thereto is a motor housing or the like.

Patent Literature 1, for example, discloses a method for producing a cast item, by which a smart core including a tubular pipe having an inner space filled with a filler is inserted into a mold having a cavity formed therein, a molten metal material is injected into the cavity, and then the filler in the smart core is removed.

### Citation List

### Patent Literature

Patent Literature 1 : Japanese Patent Application Publication No. 2020-124743

### Summary of Invention

### Technical Problem

In Patent Literature 1, the molten metal material is injected into the cavity in a state where the smart core is placed in the cavity of the mold. This may undesirably move the smart core in the cavity. In the case where the smart core has a certain shape, the smart core may be deformed by the molten metal material being poured into the cavity. This involves an undesirable possibility that a desired cast item is not produced.

The present invention made in light of such a point has an object of providing a cast item including a pipe placed at a predetermined position, a mold for producing such a cast item, a cast item production device, and a method for producing such a cast item.

### Solution to Problem

A mold according to the present invention includes a mold body including a fixed mold and a movable mold movable toward, or away from, the fixed mold; a molding space defined by at least the fixed mold and the movable mold and allowing a pipe to be placed therein; an injection opening through which a molten metal material is allowed to be injected into the molding space; a holding portion holding both of two ends of the pipe; and a suppressing member suppressing movement of the pipe in the molding space when the molten metal material is injected into the molding space.

The mold according to the present invention includes the suppressing member suppressing the movement of the pipe in the molding space when the molten metal material is injected into the molding space. According to the above-described embodiment, the suppressing member keeps the pipe at a predetermined position in the molding space. Therefore, the cast item including the pipe placed at a predetermined position with high precision is produced.

A cast item production device according to the present invention includes a mold including a fixed mold, a movable mold movable toward, or away from, the fixed mold, a molding space defined by at least the fixed mold and the movable mold and allowing a pipe to be placed therein, an injection opening through which a molten metal material is allowed to be injected into the molding space, a holding portion holding both of two ends of the pipe, and a suppressing member suppressing movement of the pipe in the molding space when the molten metal material is injected into the molding space; and a metal material transportation device injecting the molten metal material into the molding space through the injection opening.

The mold of the cast item production device according to the present invention includes the suppressing member suppressing the movement of the pipe in the molding space when the molten metal material is injected into the molding space. According to the above-described embodiment, the suppressing member keeps the pipe at a predetermined position in the molding space when the metal material transportation device injects the molten metal material into the molding space through the injection opening. Therefore, the cast item including the pipe placed at a predetermined position with high precision is produced.

A production method according to the present invention is a method for producing a cast item including a pipe and a metal member cast around the pipe. The method includes a preparation step of preparing a mold including a fixed mold, a movable mold movable toward, or away from, the fixed mold, a molding space defined by at least the fixed mold and the movable mold and allowing the pipe to be placed therein, an injection opening through which a molten metal material is allowed to be injected into the molding space, a holding portion holding both of two ends of the pipe, and a suppressing member suppressing movement of the pipe in the molding space when the molten metal material is injected into the molding space; a placement step of causing the pipe to be held by the holding portion and placing the pipe in the molding space such that the pipe is in contact with the suppressing member; a mold clamping step of moving the movable mold toward the fixed mold to close the mold; a filling step of injecting the molten metal material into the molding space through the injection opening to fill the molding space with the molten metal material; and a removal step of moving the movable mold away from the fixed mold to open the mold and removing the cast item.

According to the production method of the present invention, in the placement step, the pipe is caused to be held by the holding portion and is placed in the molding space such that the pipe is in contact with the suppressing member. According to the above-described embodiment, when, in the filling step, the molten metal material is injected into the molding space through the injection opening to fill the molding space with the molten metal material, the movement of the pipe in the molding space is suppressed by the suppressing member. Therefore, the pipe is kept at a predetermined position in the molding space, and thus the cast item including the pipe placed at a predetermined position with high precision is produced.

A cast item according to the present invention includes a pipe; and a metal member cast around the pipe. The pipe includes a first end, a second end, and a middle portion positioned between the first end and the second end. The first end and the second end protrude outward from the metal member. A part of the middle portion is exposed outside from the metal member.

According to the cast item of the present invention, a part of the middle portion of the pipe is exposed outside from the metal member. According to the above-described embodiment, the ease of heat dissipation of a solvent or the like passing the inside of the pipe is improved. In addition, the remaining part of the middle portion is not exposed outside from the metal member, and therefore, is protected by the metal member. In this manner, a part of the middle portion is exposed outside from the metal member, so that the cast item optimum for the purpose or environment of use thereof is provided.

Another cast item according to the present invention includes a pipe; and a metal member cast around the pipe. The pipe includes a first end, a second end lined up in a predetermined direction with the first end, and a middle portion positioned between the first end and the second end. The middle portion is formed to have a spiral shape extending in the predetermined direction. The metal member includes an inner circumferential surface placed radially inner to the middle portion and a recessed portion recessed in a radially outward direction from the inner circumferential surface, as seen in the predetermined direction.

According to the another cast item of the present invention, the metal member includes the inner circumferential surface placed radially inner to the middle portion and the recessed portion recessed in the radially outward direction from the inner circumferential surface, as seen in the predetermined direction. According to the above-described embodiment, the inner circumferential surface of the metal member has a larger surface area, and therefore, the ease of cooling is improved.

### Advantageous Effects of Invention

According to the present invention, a cast item including a pipe placed at a predetermined position, a mold for producing such a cast item, a cast item production device, and a method for producing such a cast item are provided.

### Brief Description of Drawings

[Fig. 1] Fig. 1 is a schematic view of a cast item production device according to Embodiment 1.
[Fig. 2] Fig. 2 is a perspective view schematically showing a hollow pipe.
[Fig. 3A] Fig. 3A is a perspective view schematically showing a cast item according to Embodiment 1.
[Fig. 3B] Fig. 3B is a side view schematically showing the cast item according to Embodiment 1.
[Fig. 4] Fig. 4 is a perspective view of a movable mold according to Embodiment 1.
[Fig. 5] Fig. 5 is a perspective view showing a state where the hollow pipe is attached to the movable mold according to Embodiment 1.
[Fig. 6] Fig. 6 is a perspective view showing a state where the hollow pipe is placed on a fixed mold according to Embodiment 1.
[Fig. 7] Fig. 7 is a perspective view showing a state where the hollow pipe is placed on a core according to Embodiment 1.
[Fig. 8] Fig. 8 is a perspective view showing a state where a slidable core is inserted into a middle portion of the hollow pipe according to Embodiment 1.
[Fig. 9] Fig. 9 is a perspective view of the slidable core according to Embodiment 1.
[Fig. 10] Fig. 10 is a side view showing the positional relationship among protruding members, protruding portions and the hollow pipe in a state where the hollow pipe is placed in a molding space.
[Fig. 11] Fig. 11 is a flowchart showing a method for producing the cast item.
[Fig. 12] Fig. 12 is a perspective view of a slidable core according to a modification.
[Fig. 13] Fig. 13 is a side view showing the positional relationship among protruding members, protruding portions and the hollow pipe in a state where the hollow pipe is placed in a molding space according to a modification.
[Fig. 14] Fig. 14 is a perspective view schematically showing a cast item according to a modification.
[Fig. 15] Fig. 15 is a schematic view of a cast item production device according to Embodiment 2.
[Fig. 16] Fig. 16 is a perspective view schematically showing a cast item according to Embodiment 2.
[Fig. 17] Fig. 17 is a perspective view of a movable mold according to Embodiment 2.
[Fig. 18] Fig. 18 is a perspective view showing a state where the hollow pipe is attached to the movable mold according to Embodiment 2.
[Fig. 19] Fig. 19 is a perspective view showing a state where the hollow pipe is placed on a fixed mold according to Embodiment 2.
[Fig. 20] Fig. 20 is a perspective view showing a state where the hollow pipe is placed on a core according to Embodiment 2.
[Fig. 21] Fig. 21 is a side view showing the positional relationship among recessed grooves, protruding portions and the hollow pipe in a state where the hollow pipe is placed in the molding space.
[Fig. 22] Fig. 22 is a front view showing the positional relationship between movable mold-side protruding members and the hollow pipe according to Modification 1.
[Fig. 23] Fig. 23 is a plan view showing the positional relationship between movable mold-side protruding members and the hollow pipe according to Modification 2.
[Fig. 24] Fig. 24 is a perspective view of a movable mold according to Modification 1.
[Fig. 25] Fig. 25 is a perspective view of a movable mold according to Modification 2.

### Description of Embodiments

Hereinafter, embodiments of a cast item production device according to the present invention will be described with reference to the drawings. The embodiments described herein are, of course, not intended to particularly limit the present invention. Elements and portions having the same functions are denoted by the same reference signs, and description for the same elements and portions will be omitted or simplified as appropriate.

### <Embodiment 1>

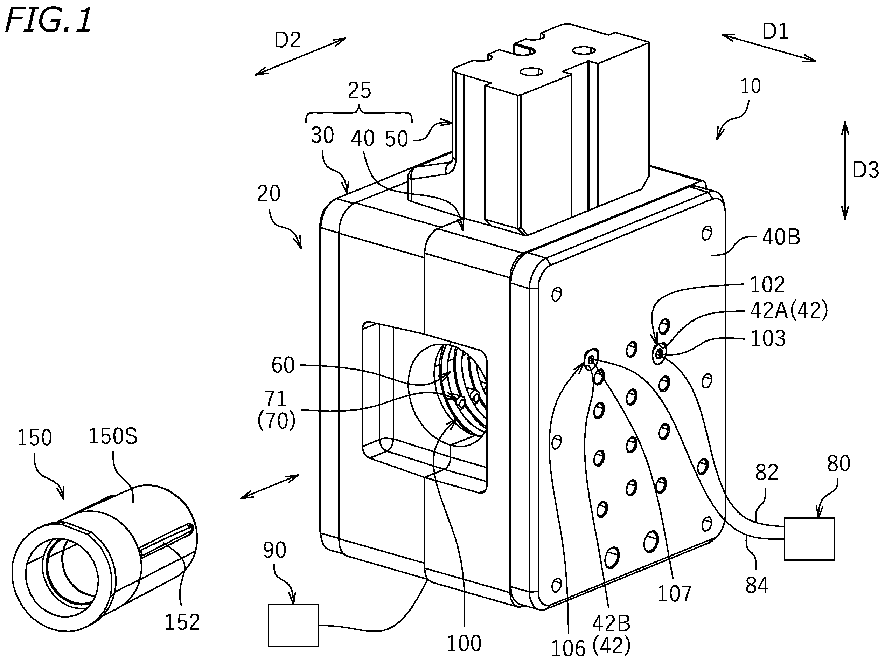

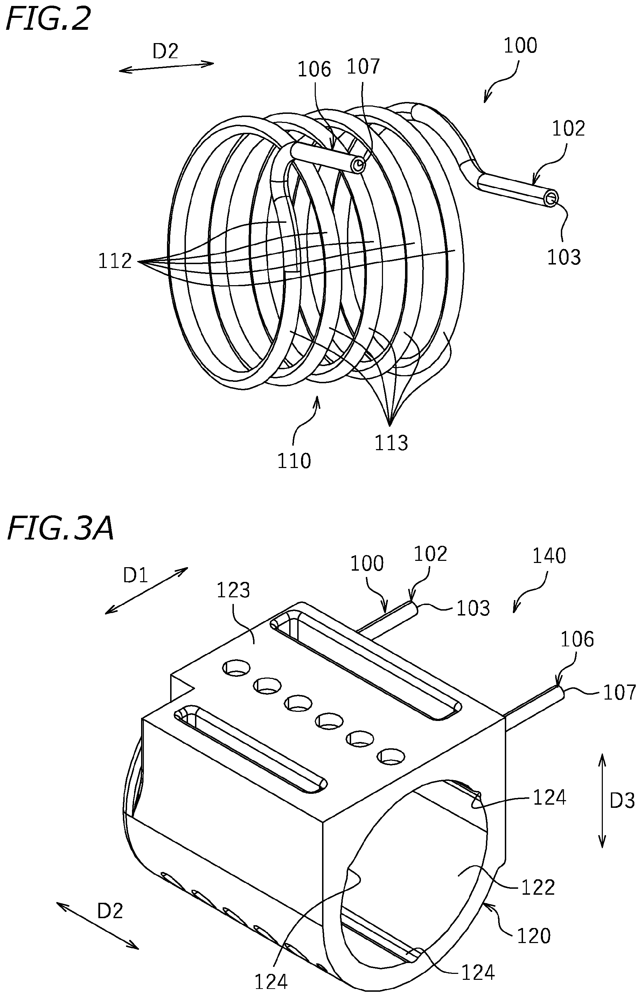

Fig. 1 is a schematic view of a cast item production device 10 according to this embodiment. The cast item production device 10 uses a diecast method, that is, a casting method in a high-speed, high pressure state (so-called high-pressure casting). Herein, the term "high pressure" refers to, for example, 20 MPa to 100 MPa. The cast item production device 10 produces a cast item 140 (see Fig. 3A) including a hollow pipe 100 (see Fig. 2) and a metal member 120 (see Fig. 3A) cast around the hollow pipe 100. The cast item production device 10 includes a mold 20, a filler transportation device 80, and a metal material transportation device 90. Herein, a direction in which a movable mold 40 described below moves with respect to a fixed mold 30 will be referred to as a "first direction D1", a direction that perpendicularly crosses the first direction D1 as seen in a plan view will be referred to as a "second direction D2", and an up-down direction will be referred to as a "third direction D3". The second direction D2 is an example of predetermined direction. Note that the above-mentioned directions are merely defined for the sake of convenience, and do not limit the manner of installation of the mold 20 in any way, or do not limit the present invention in any way.

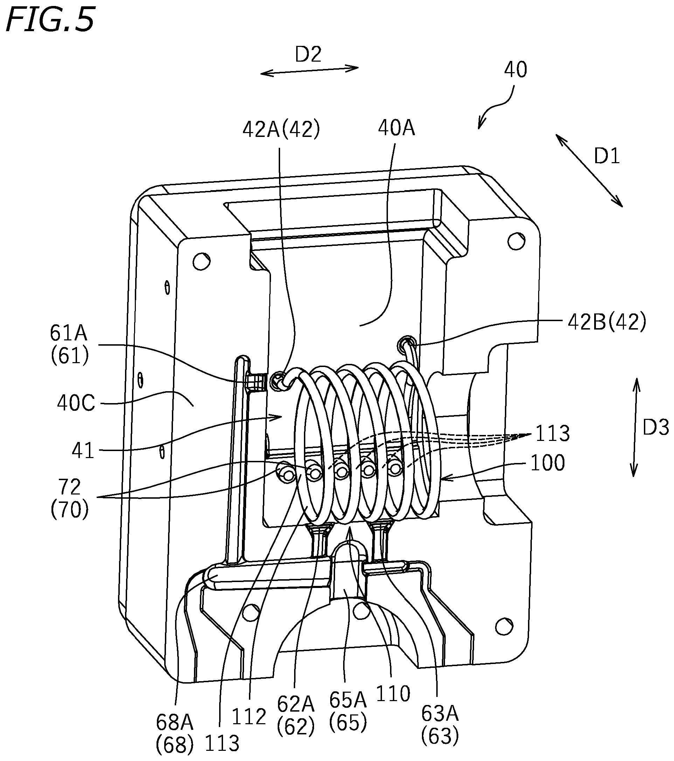

The hollow pipe 100 is formed of a metal material having a high thermal conductivity (e.g., an aluminum alloy). The hollow pipe 100 is an example of pipe. The hollow pipe 100 has a circular cross-section. The hollow pipe 100 is not limited to having a circular cross-section, and may have, for example, an elliptical cross-section. As shown in Fig. 2, the hollow pipe 100 includes a straight first end 102, a straight second end 106 parallel to the first end 102, and a middle portion 110 positioned between the first end 102 and the second end 106. The first end 102, the second end 106 and the middle portion 110 are formed integrally with each other. The first end 102 includes an injection opening 103, into which a non-compressive fluid is to be injected. The second end 106 includes a discharge opening 107, from which the non-compressive fluid is to be discharged. The first end 102 and the second end 106 have an equal length to each other from the middle portion 110, but may have different lengths from each other. The first end 102 and the second end 106 are lined up in the second direction D. The first end 102 and the second end 106 extend in the same direction as each other from the middle portion 110. That is, the injection opening 103 and the discharge opening 107 are opened in the same direction. The injection opening 103 and the discharge opening 107 may be opened in different directions from each other. The middle portion 110 is formed to have a spiral shape extending in the second direction D2. The middle portion 110 includes a plurality of curved portions 112 curved in an arcked shape. The curved portions 112 are lined up in the second direction D2. In a state where the hollow pipe 100 is insert-molded with the metal member 120, the curved portions 112 are covered with the metal member 120 and are not exposed outside. As shown in Fig. 5, the middle portion 110 includes a plurality of engaged portions 113 lined up in the second direction D2. The engaged portions 113 are respectively parts of the curved portions 112. The middle portion 110 is not limited to having a spiral shape.

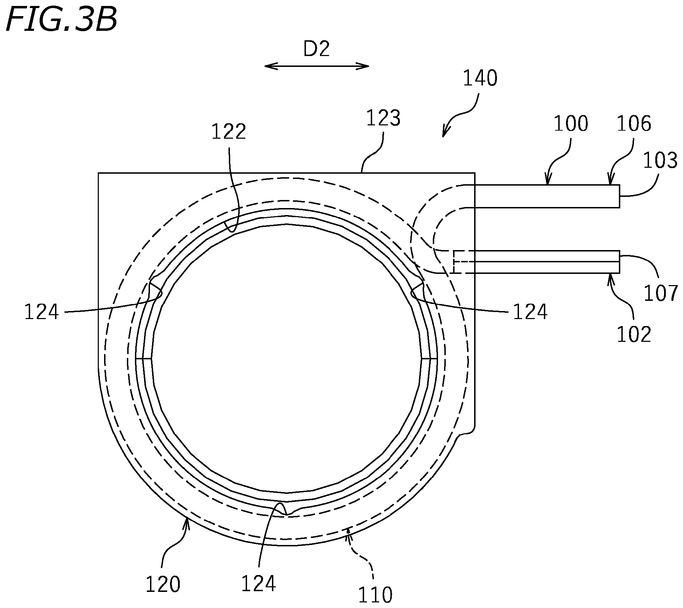

As shown in Fig. 3A, the cast item 140 includes the hollow pipe 100 and the metal member 120 cast around the hollow pipe 100. The hollow pipe 100 and the metal member 120 are integrated with each other. Of the hollow pipe 100, a part of the first end 102, a part of the second end 106 and the entirety of the middle portion 110 (i.e., the entirety of the curved portions 112) are covered with the metal member 120. A part, of the first end 102, that includes the injection opening 103 and a part, of the second end 106, that includes the discharge opening 107 are exposed outside from the metal member 120. The metal member 120 is formed of the same metal material as that of, for example, the hollow pipe 100. The metal member 120 and the hollow pipe 100 may be formed of different metal materials from each other. As shown in Fig. 3A and Fig. 3B, as seen in the second direction D2, the metal member 120 includes an inner circumferential surface 122 positioned radially inner to the middle portion 110, an outer circumferential surface 123 positioned radially outer to the middle portion 110, and recessed portions 124 recessed radially outward from the inner circumferential surface 122. The recessed portions 124 extend in the second direction D2. The recessed portions 124 are opened in the second direction D2 at one of two ends in the second direction D2 of the inner circumferential surface 122. The recessed portions 124 may be opened in the second direction D2 also at the other of the two ends in the second direction D2 of the inner circumferential surface 122. The recessed portions 124 are provided at an equal interval in a circumferential direction of the inner circumferential surface 122. In this embodiment, the metal member 120 includes three recessed portions 124. The number of the recessed portions 124 is not limited to three. A part of the middle portion 110 may be exposed outside at the recessed portions 124. The cast item 140 is usable as, for example, a motor housing or the like.

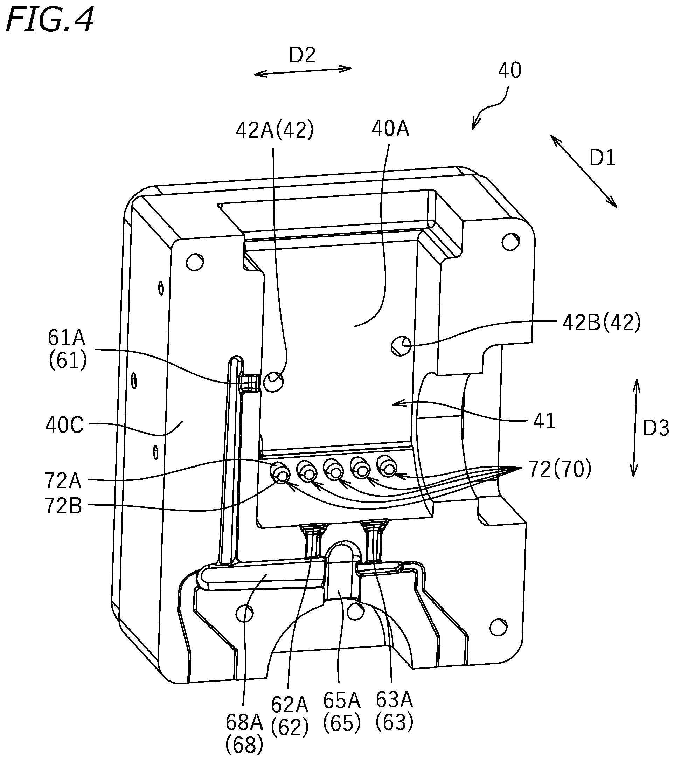

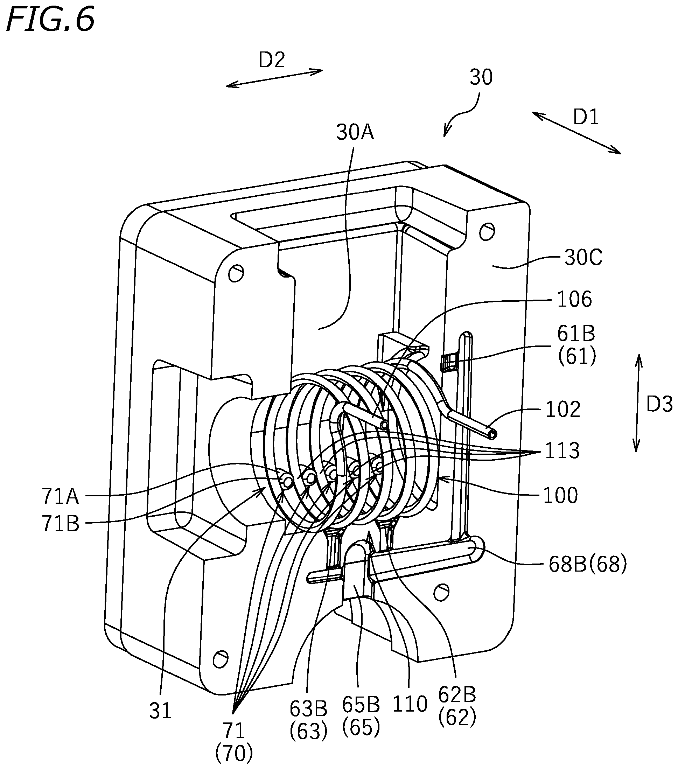

As shown in Fig. 1, the mold 20 includes a mold body 25. The mold body 25 includes the fixed mold 30, the movable mold 40 movable toward, or away from, the fixed mold 30, a core 50 at least partially positioned between the fixed mold 30 and the movable mold 40, and a slidable core 150 at least partially positioned between the fixed mold 30 and the movable mold 40. The fixed mold 30 includes a cavity 31 (see Fig. 6), usable to form a part of the cast item 140, formed therein. The movable mold 40 includes a core portion 41 (see Fig. 4), usable to form a part of the cast item 140, formed therein. The core 50 is slidably movable in the third direction D3. The slidable core 150 is slidably movable in the second direction D2. The slidable core 150 is formed to have a cylindrical shape (encompassing a hollow cylindrical shape and a solid cylindrical shape). The slidable core 150 extends in the second direction D2. The slidable core 150 is insertable into the middle portion 110 (a portion inner to the spiral portion) of the hollow pipe 100.

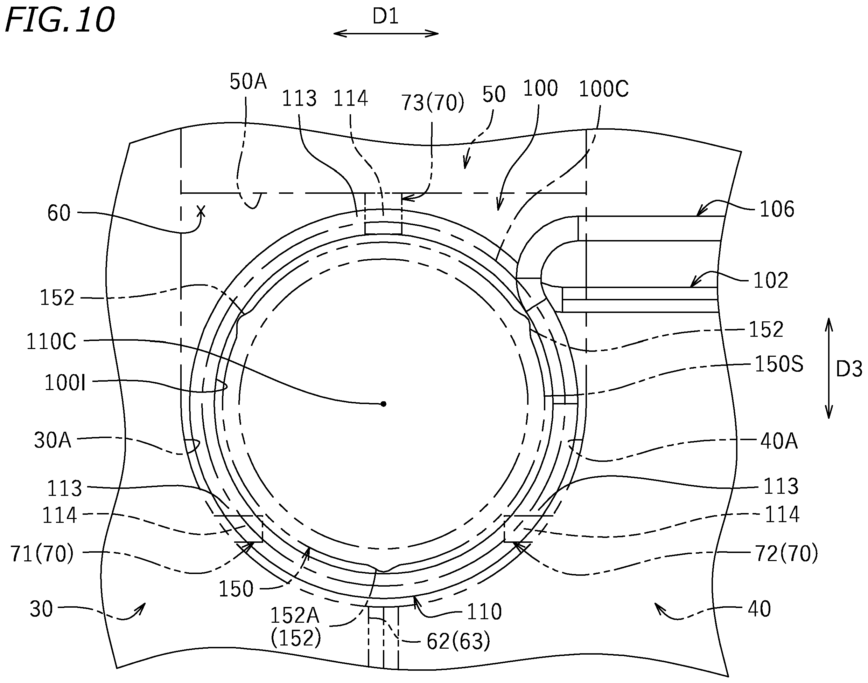

As shown in Fig. 1, the mold 20 includes a molding space 60 (see also Fig. 10), in which the hollow pipe 100 may be placed. The molding space 60 is a space in which the hollow pipe 100 is to be placed. The holding space 60 is a space in which a melted metal material (molten metal material) is to be injected. The molding space 60 is a space in which the cast item 104 is to be produced by molding. When the movable mold 40, the core 50 and the slidable core 150 are moved toward the fixed mold 30 to close the mold 20, the movable mold 40, the fixed mold 30, the core 50 and the slidable core 150 form the molding space 60 (see also Fig. 10). The molding space 60 is defined by the fixed mold 30, the movable mold 40, the core 50 and the slidable core 150. In the case where the mold body 25 does not include the core 50 or the slidable core 150, the molding space 60 is defined by the fixed mold 30 and the movable mold 40.

The mold 20 includes holding portions 42 (see Fig. 4) holding both of the ends of the hollow pipe 100 (i.e., the first end 102 and the second end 106). As shown in Fig. 5, the movable mold 40 includes the first holding portion 42A (see also Fig. 4) holding the first end 102 of the hollow pipe 100 and the second holding portion 42B (see also Fig. 4) holding the second end 106 of the hollow pipe 100. The first holding portion 42Aand the second holding portion 42B are through-holes formed in the movable mold 40. The first holding portion 42A and the second holding portion 42B allow an inner surface 40A and an outer surface 40B (see Fig. 1) of the movable mold 40 to communicate to each other. When the hollow pipe 100 is placed in the molding space 60 (i.e., when the hollow pipe 100 is attached to the movable mold 40), the first end 102 is inserted through the first holding portion 42A and the second end 106 is inserted through the second holding portion 42B. As a result, the hollow pipe 100 is held by the movable mold 40. In a state where the first end 102 is inserted through the first holding portion 42A, the injection opening 103 is exposed to the outside of the movable mold 40 (see Fig. 1). In a state where the second end 106 is inserted through the second holding portion 42B, the discharge opening 107 is exposed to the outside of the movable mold 40 (see Fig. 1). As shown in Fig. 10, in this embodiment, the first holding portion 42A and the second holding portion 42B are provided in the movable mold 40. Alternatively, the first holding portion 42A and the second holding portion 42B may be provided in the fixed mold 30. In a state where the hollow pipe 100 is placed in the molding space 60 (i.e., in a state where the hollow pipe 100 is attached to the movable mold 40), the middle portion 110 of the hollow pipe 100 is not in contact with the inner surface 40A of the movable mold 40, an inner surface 30A of the fixed mold 30, or an inner surface 50A of the core 50.

The mold 20 includes a plurality of protruding members 70 suppressing movement of the hollow pipe 100 in the molding space 60 when the molten metal material is injected into the molding space 60. The protruding members 70 are configured to suppress the movement of the middle portion 110 of the hollow pipe 100 in the second direction D2. The protruding members 70 are configured to suppress the movement of the middle portion 110 of the hollow pipe 100 in a direction crossing the second direction D (e.g., a direction perpendicularly crossing the second direction D2, for example, a radial direction of the middle portion 110) (to suppress the movement of the middle portion 110 in, for example, a radially outward direction). The protruding members 70 protrude into the molding space 60 from an inner surface of the mold body 25. The protruding members 70 are each an example of suppressing member. As shown in Fig. 10, the protruding members 70 include fixed mold-side protruding members 71 provided on the fixed mold 30, movable mold-side protruding members 72 provided on the movable mold 40, and core-side protruding members 73 provided on the core 50.

As shown in Fig. 4, the movable mold-side protruding members 72 are provided on the movable mold 40. The movable mold-side protruding members 72 are formed integrally with the movable mold 40. The movable mold-side protruding members 72 may be formed separately from the movable mold 40. That is, the movable mold-side protruding members 72 may be provided to be detachable from the mold body 25 (in this embodiment, the movable mold 40). The movable mold-side protruding members 72 protrude into the molding space 60 from the inner surface 40A of the movable mold 40. The movable mold-side protruding members 72 protrude toward the fixed mold 30 from the inner surface 40A of the movable mold 40. The movable mold-side protruding members 72 extend in the first direction D1. The movable mold-side protruding members 72 are positioned below the first holding portion 42A and the second holding portion 42B. The movable mold-side protruding members 72 may be positioned above the first holding portion 42A and the second holding portion 42B. The movable mold-side protruding members 72 are lined up straight in the second direction D2. Adjacent ones of the movable mold-side protruding members 72 have a pitch in the second direction D2 that is equal to that of adjacent ones of the curved portions 112 of the hollow pipe 100 in the second direction D2. As shown in Fig. 5, the plurality of movable mold-side protruding members 72 are respectively provided to be positioned between adjacent ones of the engaged portions 113 when the hollow pipe 100 is placed in the molding space 60 (i.e., when the hollow pipe 100 is attached to the movable mold 40). The movable mold-side protruding members 72 are provided to be contactable with the hollow pipe 100 (in more detail, with the engaged portions 113). In this embodiment, five movable mold-side protruding members 72 are provided on the movable mold 40. The number of the movable mold-side protruding members 72 is not limited to five. The plurality of movable mold-side protruding members 72 have an equal amount of protrusion to each other from the inner surface 40A of the movable mold 40 (the movable mold-side protruding members 72 have an equal length to each other in the first direction D1). The plurality of movable mold-side protruding members may protrude from the inner surface 40A of the movable mold 40 by different amounts from each other. For example, the amount of protrusion of a part of the plurality of movable mold-side protruding members 72 from the inner surface 40A of the movable mold 40, and the amount of protrusion of another part of the plurality of movable mold-side protruding members 72 from the inner surface 40A of the movable mold 40, may be different from each other. As shown in Fig. 4, the movable mold-side protruding members 72 each include a cylindrical body 72A extending in the first direction D1 from the inner surface 40A of the movable mold 40 and a tapering portion 72B extending in the first direction D1 from a tip of the body 72Aand decreased in the diameter toward a tip thereof. That is, the tapering portion 72B is formed to have a diameter decreasing toward the tip thereof. The movable mold-side protruding members 72 may include only the bodies 72A or may include only the tapering portions 72B. An interval between the tips of adjacent ones of the movable mold-side protruding members 72 is wider than an interval between bases thereof. The interval between the tips of adjacent ones of the movable mold-side protruding members 72 and the interval between the bases thereof may be equal to each other.

As shown in Fig. 6, the fixed mold-side protruding members 71 are provided on the fixed mold 30. The fixed mold-side protruding members 71 are formed integrally with the fixed mold 30. The fixed mold-side protruding members 71 may be formed separately from the fixed mold 30. That is, the fixed mold-side protruding members 71 may be provided to be detachable from the mold body 25 (in this embodiment, the fixed mold 30). The fixed mold-side protruding members 71 protrude into the molding space 60 from the inner surface 30A of the fixed mold 30. The inner surface 30A faces the inner surface 40A of the movable mold 40. The fixed mold-side protruding members 71 protrude toward the movable mold 40 from the inner surface 30A of the fixed mold 30. The fixed mold-side protruding members 71 extend in the first direction D1. The fixed mold-side protruding members 71 are lined up straight in the second direction D2. Adjacent ones of the fixed mold-side protruding members 71 have a pitch in the second direction D2 that is equal to that of adjacent ones of the curved portions 112 of the hollow pipe 100 in the second direction D2. The plurality of fixed mold-side protruding members 71 are respectively provided to be positioned between adjacent ones of the engaged portions 113 when the hollow pipe 100 is placed in the molding space 60 (i.e., when the mold 20 is closed). The fixed mold-side protruding members 71 are provided to be contactable with the hollow pipe 100 (in more detail, with the engaged portions 113). In this embodiment, five fixed mold-side protruding members 71 are provided on the fixed mold 30. The number of the fixed mold-side protruding members 71 is not limited to five. The plurality of fixed mold-side protruding members 71 have an equal amount of protrusion to each other from the inner surface 30A of the fixed mold 30 (the fixed mold-side protruding members 71 have an equal length to each other in the first direction D1). The plurality of fixed mold-side protruding members 71 may protrude from the inner surface 30A of the fixed mold 30 by different amounts from each other. For example, the amount of protrusion of a part of the plurality of fixed mold-side protruding members 71 from the inner surface 30A of the fixed mold 30, and the amount of protrusion of another part of the plurality of fixed mold-side protruding members 71 from the inner surface 30A of the fixed mold 30, may be different from each other. The fixed mold-side protruding members 71 each include a cylindrical body 71A extending in the first direction D1 from the inner surface 30A of the fixed mold 30 and a tapering portion 71B extending in the first direction D1 from a tip of the body 71A and decreased in the diameter toward a tip thereof. That is, the tapering portion 71B is formed to have a diameter decreasing toward the tip thereof. The fixed mold-side protruding members 71 may include only the bodies 71A or may include only the tapering portions 71B. An interval between the tips of adjacent ones of the fixed mold-side protruding members 71 is wider than an interval between bases thereof. The interval between the tips of adjacent ones of the fixed mold-side protruding members 71 and the interval between the bases thereof may be equal to each other.

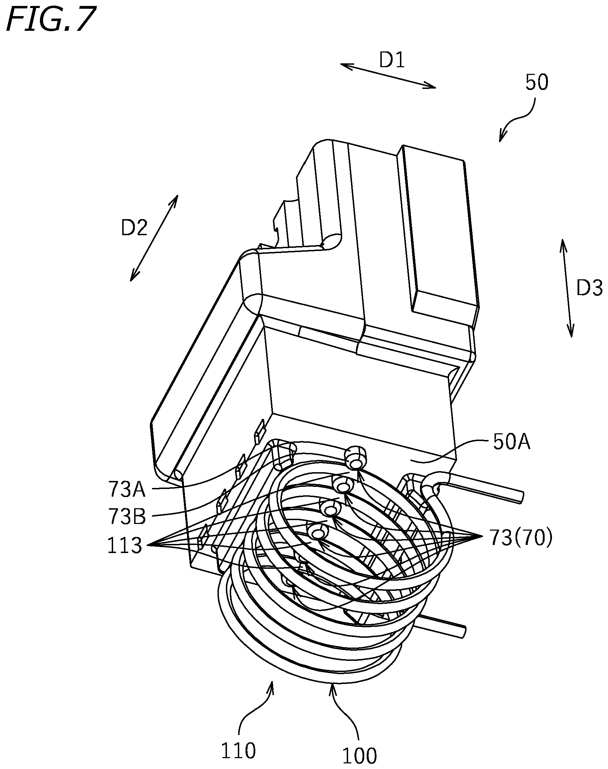

As shown in Fig. 7, the core-side protruding members 73 are provided on the core 50. The core-side protruding members 73 are formed integrally with the core 50. The core-side protruding members 73 may be formed separately from the core 50. That is, the core-side protruding members 73 may be provided to be detachable from the mold body 25 (in this embodiment, the core 50). The core-side protruding members 73 protrude into the molding space 60 from the inner surface 50Aof the core 50. The inner surface 50A perpendicularly crosses the inner surface 40A of the movable mold 40 and the inner surface 30A of the fixed mold 30. The core-side protruding members 73 protrude downward from the inner surface 50A of the core 50. The core-side protruding members 73 extend in the third direction D3. The core-side protruding members 73 are lined up straight in the second direction D2. Adjacent ones of the core-side protruding members 73 have a pitch in the second direction D2 that is equal to that of adjacent ones of the curved portions 112 of the hollow pipe 100 in the second direction D2. The plurality of core-side protruding members 73 are respectively provided to be positioned between adjacent ones of the engaged portions 113 when the hollow pipe 100 is placed in the molding space 60 (i.e., when the mold 20 is closed). The core-side protruding members 73 are provided to be contactable with the hollow pipe 100 (in more detail, with the engaged portions 113) when the hollow pipe 100 is placed in the molding space 60 (i.e., when the mold 20 is closed). In this embodiment, six core-side protruding members 73 are provided on the core 50. The number of the core-side protruding members 73 is not limited to six. The plurality of core-side protruding members 73 have an equal amount of protrusion to each other from the inner surface 50A of the core 50 (the core-side protruding members 73 have an equal length to each other in the third direction D3). The plurality of core-side protruding members 73 may protrude from the inner surface 50A of the core 50 by different amounts from each other. For example, the amount of protrusion of a part of the plurality of core-side protruding members 73 from the inner surface 50A of the core 50, and the amount of protrusion of another part of the plurality of core-side protruding members 73 from the inner surface 50A of the core 50, may be different from each other. The core-side protruding members 73 each include a cylindrical body 73A extending in the third direction D3 from the inner surface 50A of the core 50 and a tapering portion 73B extending in the third direction D3 from a tip of the body 73A and decreased in the diameter toward a tip thereof. That is, the tapering portion 73B is formed to have a diameter decreasing toward the tip thereof. The core-side protruding members 73 may include only the bodies 73A or may include only the tapering portions 73B. An interval between the tips of adjacent ones of the core-side protruding members 73 is wider than an interval between bases thereof. The interval between the tips of adjacent ones of the core-side protruding members 73 and the interval between the bases thereof may be equal to each other.

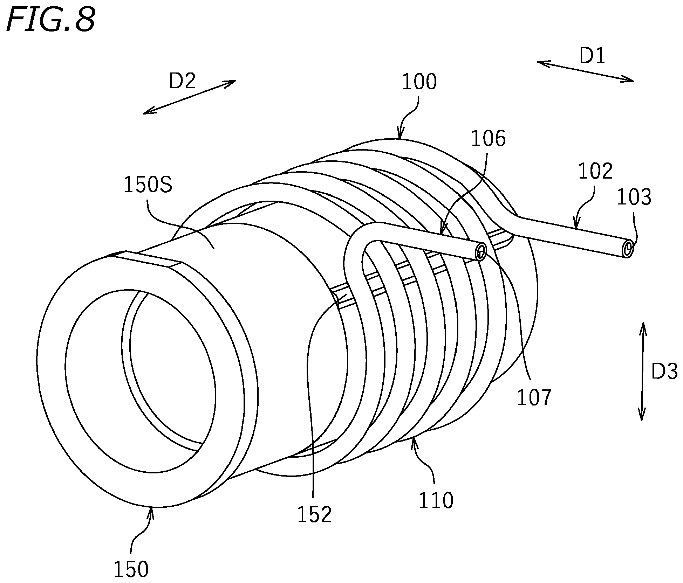

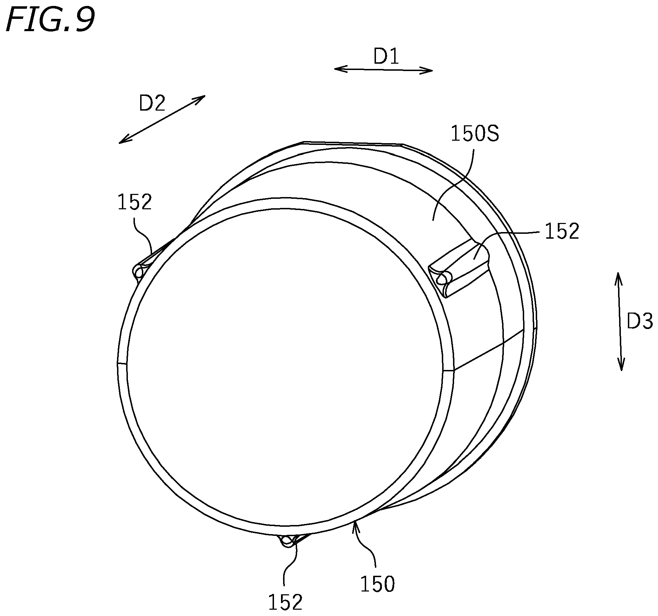

As shown in Fig. 1, the mold 20 includes a plurality of protruding portions 152 suppressing the movement of the hollow pipe 100 in the molding space 60 when the molten metal material is injected into the molding space 60. The protruding portions 152 are configured to suppress the movement of the middle portion 110 of the hollow pipe 100 in a direction crossing the second direction D2 (e.g., a direction perpendicularly crossing the second direction D2, for example, the radial direction of the middle portion 110) (to suppress the movement of the middle portion 110 in a radially inward direction). The protruding portions 152 are provided to be contactable with the middle portion 110. In a process of inserting the slidable core 150 into a portion inner to the middle portion 110 of the hollow pipe 100, radially outer ends of the protruding portions 152 and an inner circumferential surface of the middle portion 110 have a gap therebetween that is sufficiently large to allow the slidable core 150 to be inserted into an inner space of the middle portion 110. In a state where the slidable core 150 has been inserted into the portion inner to the middle portion 110, the radially outer ends of the protruding portions 152 and the inner circumferential surface of the middle portion 110 are in contact with each other. In a state where the slidable core 150 has been inserted into the portion inner to the middle portion 110, the radially outer ends of the protruding portions 152 and the inner circumferential surface of the middle portion 110 do not need to be in contact with each other. That is, in a state where the slidable core 150 has been inserted into the portion inner to the middle portion 110, there may be a slight gap between the radially outer ends of the protruding portions 152 and the inner circumferential surface of the middle portion 110. This gap is preferably set such that when the middle portion 110 moves in the radial direction, the radially outer ends of the protruding portions 152 contact the inner circumferential surface of the middle portion 110 to suppress the movement of the middle portion 110 in the radially inward direction, As shown in Fig. 9, the protruding portions 152 are formed on an outer circumferential surface 150S of the slidable core 150. The protruding portions 152 extend in the second direction D2. The protruding portions 152 are formed to be away from each other in a circumferential direction of the outer circumferential surface 150S. The protruding portions 152 are provided at an equal interval in the circumferential direction of the outer circumferential surface 150S. In this embodiment, the slidable core 150 includes three protruding portions 152. The number of the protruding portions 152 is not limited to three. As shown in Fig. 8 and Fig. 10, the protruding portions 152 protrude toward the middle portion 110. The protruding portions 152 are each an example of suppressing member.

As shown in Fig. 10, in a state where the hollow pipe 100 is placed in the molding space 60, the movable mold-side protruding members 72, the fixed mold-side protruding members 71 and the core-side protruding members 73 are respectively positioned between adjacent ones of the engaged portions 113 of the hollow pipe 100, and therefore, suppress the movement of the hollow pipe 100 (especially, the movement of the middle portion 110 in the radially outward direction and in the second direction D2). In a state where the hollow pipe 100 is placed in the molding space 60, the protruding portions 152 are positioned radially inner to the middle portion 110, and therefore, suppress the movement of the middle portion 110 in the radially inward direction. In a state where the hollow pipe 100 is placed in the molding space 60, the movable mold-side protruding members 72, the fixed mold-side protruding members 71, the core-side protruding members 73 and the protruding portions 152 hold the middle portion 110 of the hollow pipe 100 at a predetermined position. In this embodiment, the core-side protruding members 73 are positioned above a center in the third direction D3 of the middle portion 110 of the hollow pipe 100 and in a central area in the first direction D1 of the middle portion 110. The movable mold-side protruding members 72 are positioned below the center in the third direction D3 of the middle portion 110 of the hollow pipe 100 and on the side of the first end 102 with respect to the center in the first direction D1 of the middle portion 110. The fixed mold-side protruding members 71 are positioned below the center in the third direction D3 of the middle portion 110 of the hollow pipe 100 and on the side opposite to the first end 102 with respect to the center in the first direction D1 of the middle portion 110. As seen along a center line 110C of the middle portion 110, the tips of the movable mold-side protruding members 72, the tips of the fixed mold-side protruding members 71 and the tips of the core-side protruding members 73 are positioned on the side of the center line 110C of the middle portion 110 with respect to a center line 100C along a spiral direction of the hollow pipe 100. Therefore, the protruding members 70 suppress the movement of the hollow pipe 100 in the molding space 60 with certainty to keep the hollow pipe 100 at a predetermined position in the molding space 60 with certainty. In addition, as seen along the center line 110C of the middle portion 110, the tips of the movable mold-side protruding members 72 and the tips of the fixed mold-side protruding members 71 are at least partially positioned on the side of the center line 110C of the middle portion 110 with respect to a radially inner-side circumferential edge 100l of the hollow pipe 100. Therefore, the movement of the hollow pipe 100 in the molding space 60 is suppressed by the protruding members 70 with more certainty to keep the hollow pipe 100 at a predetermined position in the molding space 60 with more certainty. It is not necessary that the tips of the movable mold-side protruding members 72, the tips of the fixed mold-side protruding members 71 and the tips of the core-side protruding members 73 all have the above-described relationship. It is sufficient that the tips thereof at least partially have the above-described relationship. In addition, the protruding portions 152 are provided to at least partially face a second discharge opening 62 and a third discharge opening 63 in a state where the middle portion 110 has the slidable core 150 inserted thereto. In this embodiment, for example, a protruding portion 152A is provided to face the second discharge opening 62 and the third discharge opening 63. In a state where the middle portion 110 has the slidable core 150 inserted thereto, as seen in the second direction D2, the protruding portions 152 are positioned between the protruding members 70 and the protruding members 70 in the circumferential direction of the middle portion 110. In this embodiment, for example, the protruding portion 152A is positioned between the fixed mold-side protruding members 71 and the movable mold-side protruding members 72 in the circumferential direction of the middle portion 110. The fixed mold-side protruding members 71 are each an example of first protruding member, and the movable mold-side protruding members 72 are each an example of second protruding member. In a state where the middle portion 110 has the slidable core 150 inserted thereto, the protruding portions 152 and the middle portion 110 may contact each other, but the outer circumferential surface 150S of the slidable core 150 and the middle portion 110 do not contact each other.

The mold 20 includes an injection opening 65 (see Fig. 4 and Fig. 6), through which a molten metal material may be injected into the molding space 60. The injection opening 65 is formed by the movable mold 40 and the fixed mold 30 when the movable mold 40 is moved toward the fixed mold 30 to close the mold 20. That is, the injection opening 65 is positioned at a border between the movable mold 40 and the fixed mold 30. The injection opening 65 is defined by a movable mold-side injection opening 65A (see Fig. 4) formed in the movable mold 40 and a fixed mold-side injection opening 65B (see Fig. 6) formed in the fixed mold 30. The movable mold-side injection opening 65A is formed in a contact surface 40C of the movable mold 40, the contact surface 40C being surface-contactable with a contact surface 30C of the fixed mold 30. The fixed mold-side injection opening 65B is formed in the contact surface 30C of the fixed mold 30, the contact surface 30C being surface-contactable with the contact surface 40C of the movable mold 40. The injection opening 65 is opened downward.

The mold 20 includes a flow path 68 (see Fig. 4 and Fig. 6) allowing the injection opening 65 and the molding space 60 to communicate to each other. The flow path 68 is formed by the movable mold 40 and the fixed mold 30 when the movable mold 40 is moved toward the fixed mold 30 to close the mold 20. That is, the flow path 68 is positioned at a border between the movable mold 40 and the fixed mold 30. The flow path 68 is defined by a movable mold-side flow path 68A (see Fig. 4) formed in the movable mold 40 and a fixed mold-side flow path 68B (see Fig. 6) formed in the fixed mold 30. As shown in Fig. 4, the flow path 68 includes a first discharge opening 61, a second discharge opening 62 and a third discharge opening 63, through which the molten metal material is to be discharged into the molding space 60. The first discharge opening 61, the second discharge opening 62 and the third discharge opening 63 are in communication with the injection opening 65. The first discharge opening 61 is positioned above the movable mold-side protruding members 72. The second discharge opening 62 and the third discharge opening 63 are positioned below the movable mold-side protruding members 72. The first discharge opening 61 is defined by a movable mold-side first discharge opening 61A (see Fig. 4) formed in the movable mold 40 and a fixed mold-side first discharge opening 61B (see Fig. 6) formed in the fixed mold 30. The second discharge opening 62 is defined by a movable mold-side second discharge opening 62A (see Fig. 4) formed in the movable mold 40 and a fixed mold-side second discharge opening 62B (see Fig. 6) formed in the fixed mold 30. The third discharge opening 63 is defined by a movable mold-side third discharge opening 63A (see Fig. 4) formed in the movable mold 40 and a fixed mold-side third discharge opening 63B (see Fig. 6) formed in the fixed mold 30. The movable mold-side flow path 68A, the movable mold-side first discharge opening 61A, the movable mold-side second discharge opening 62A and the movable mold-side third discharge opening 63A are formed in the contact surface 40C of the movable mold 40. The fixed mold-side flow path 68B, the fixed mold-side first discharge opening 61B, the fixed mold-side second discharge opening 62B and the fixed mold-side third discharge opening 63B are formed in the contact surface 30C of the fixed mold 30.

As shown in Fig. 1, the filler transportation device 80 is separate from the mold 20. The filler transportation device 80 injects a non-compressive fluid into the injection opening 103 of the hollow pipe 100. The filler transportation device 80 causes the non-compressive fluid to be discharged from the discharge opening 107 of the hollow pipe 100 to recover the non-compressive fluid. The non-compressive fluid may be any fluid with no specific limitation that suppresses deformation of the hollow pipe 100 when filling the hollow pipe 100 even if a load is applied to the hollow pipe 100. The non-compressive fluid is, for example, oil (e.g., hydraulic oil). The filler transportation device 80 is attached to the injection opening 103 and the discharge opening 107 of the hollow pipe 100 placed in the molding space 60 (see Fig. 1) of the mold 20. The filler transportation device 80 includes a transportation portion 82 feeding the non-compressive fluid and a recovery portion 84 recovering the non-compressive fluid. The transportation portion 82 and the recovery portion 84 are each, for example, a pressure-resistant and heat-resistant hose. The transportation portion 82 is attached to the first end 102 of the hollow pipe 100. The transportation portion 82 is in communication with the injection opening 103 of the first end 102. The recovery portion 84 is attached to the second end 106 of the hollow pipe 100. The recovery portion 84 is in communication with the discharge opening 107 of the second end 106. There is no specific limitation on the method for attaching the transportation portion 82 to the first end 102 or the method for attaching the recovery portion 84 to the second end 106. The transportation portion 82 or the recovery portion 84 may be attachable or detachable by a coupler (one-touch joint). The filler transportation device 80 may fill the hollow pipe 100 with a solid substance such as sand or the like, instead of the non-compressive fluid.

As shown in Fig. 1, the metal material transportation device 90 is separate from the mold 20. The metal material transportation device 90 injects a melted metal material (molten metal material) into the molding space 60 through the injection opening 65 of the mold 20. The metal material transportation device 90 is. for example, an injection device capable of applying a predetermined pressure to the molten metal material and injecting the molten metal material at a predetermined injection speed.

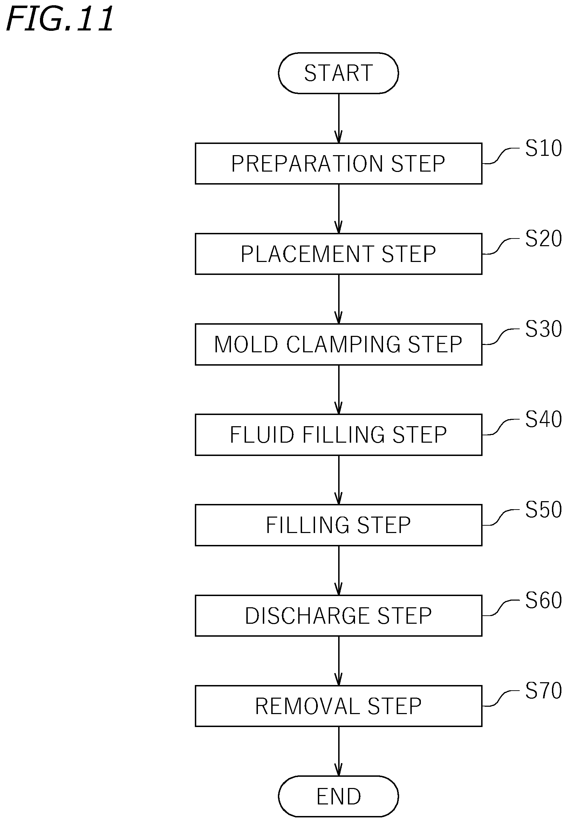

Now, a method for producing the cast item 140 will be described. Fig. 11 is a flowchart showing the method for producing the cast item 140 (hereinafter, referred to simply as a "production method"). As shown in Fig. 11, the production method includes a preparation step (step S10), a placement step (step S20), a mold clamping step (step S30), a fluid filling step (step S40), a filling step (step S50), a discharge step (step S60), and a removal step (step S70). In this embodiment, as shown in Fig. 1, the cast item 140 (see Fig. 3A) is produced by use of the cast item production device 10 including the mold 20, the filler transportation device 80 and the metal material transportation device 90.

First, in the preparation step (step S10), as shown in Fig. 1, the mold 20 is prepared. In more detail, the mold 20 is prepared including the fixed mold 30, the movable mold 40 movable toward, or away from, the fixed mold 30, the core 50, the slidable core 150, the molding space 60 defined by the fixed mold 30, the movable mold 40, the core 50 and the slidable core 150 and allowing the hollow pipe 100 to be placed therein, the injection opening 65, through which a molten metal material may be injected into the molding space 60, the first holding portion 42A and the second holding portion 42B respectively holding the first end 102 and the second end 106 of the hollow pipe 100, and the protruding members 70 suppressing the movement of the hollow pipe 100 in the molding space 60 when the molten metal material is injected into the molding space 60.

Next, in the placement step (step S20), the hollow pipe 100 is placed in the molding space 60. In more detail, the first end 102 of the hollow pipe 100 is caused to be held by the first holding portion 42A of the movable mold 40 and the second end 106 of the hollow pipe 100 is caused to be held by the second holding portion 42B of the movable mold 40, such that the hollow pipe 100 is in contact with the protruding members 70 (in this embodiment, such that the engaged portions 113 of the hollow pipe 100 are in contact with the movable mold-side protruding members 72). In this manner, the hollow pipe 100 is attached to the movable mold 40.

Next, in the mold clamping step (step S30), the movable mold 40, the core 50 and the slidable core 150 are moved toward the fixed mold 30 to close the mold 20. As a result, the molding space 60, in which the cast item 140 is to be produced by molding, is defined by the cavity 31 of the fixed mold 30, the core portion 41 of the movable mold 40, the core 50 and the slidable core 150. In a state where the mold 20 is closed, the middle portion 110 of the hollow pipe 100 is in contact with the movable mold-side protruding members 72, the fixed mold-side protruding members 71 and the core-side protruding members 73. Therefore, the movement of the middle portion 110 is suppressed by the movable mold-side protruding members 72, the fixed mold-side protruding members 71 and the core-side protruding members 73. The middle portion 110 has the slidable core 150 inserted thereto. Therefore, the movement of the middle portion 110 in the radially inward direction is suppressed by the protruding portions 152 of the slidable core 150.

Next, in the fluid filling step (step S40), a non-compressive fluid (e.g., oil) is injected through the injection opening 103 of the first end 102 to fill the hollow pipe 100 with the non-compressive fluid. In more detail, the transportation portion 82 of the filler transportation device 80 is attached to the first end 102 of the hollow pipe 100 by a one-touch joint or the like, and the recovery portion 84 of the filler transportation device 80 is attached to the second end 106 of the hollow pipe 100 by a one-touch joint or the like. Then, the hollow pipe 100 is filled with the non-compressive fluid from the filler transportation device 80 through the injection opening 103. After the filling of the hollow pipe 100 with the non-compressive fluid is finished, the filler transportation device 80 may be detached from the hollow pipe 100 or may be kept attached thereto. In this embodiment, the fluid filling step (step S40) is performed after the mold clamping step (step S30). Alternatively, the mold clamping step (step S30) may be performed after the fluid filling step (step S40).

Next, in the filling step (step S50), the molten metal material is injected through the injection opening 65 of the mold 20 into the molding space 60 formed by the movable mold 40, the fixed mold 30, the core 50 and the slidable core 150. In this manner, the molding space 60 is filled with the molten metal material. An example of the metal material is an aluminum alloy. The melted metal material (molten metal material) is cooled in the mold 20 to be coagulated. Herein, the term "cooling" refers to cooling performed to coagulate the molten metal material.

Next, in the discharge step (step S60), the non-compressive fluid filling the hollow pipe 100 is discharged through the discharge opening 107 of the second end 106 of the cast item 140. In more detail, the filler transportation device 80 is driven to discharge the non-compressive fluid through the discharge opening 107 of the second end 106 of the hollow pipe 100 toward the filler transportation device 80. The non-compressive fluid discharged through the discharge opening 107 is recovered by the filler transportation device 80. After the non-compressive fluid is discharged from the hollow pipe 100, the filler transportation device 80 is detached from the hollow pipe 100. The discharge step (step S60) is performed in a state where the cast item 140 is placed in the mold 20. The discharge step (step S60) may be performed after the molten metal material in the mold 20 is completely coagulated or in the middle of the coagulation of the molten metal material. That is, the discharge of the non-compressive fluid may be started after the curing time (time necessary to cool and thus coagulate the molten metal material) elapses or before the curing time elapses.

Next, in the removal step (step S70), the movable mold 40, the core 50 and the slidable core 150 are moved away from the fixed mold 30 to open the mold 20. At this point, the movable mold 40 has the cast item 140, produced by molding, fixed thereto. A core pin (not shown) is pressed onto the cast item 140 fixed to the movable mold 40 to remove the cast item 140, having the non-compressive fluid discharged from the hollow pipe 100, from the movable mold 40. In this manner, the cast item 140 including the hollow pipe 100 and the metal member 120 cast around the hollow pipe 100 is produced.

As described above, the mold 20 in this embodiment includes the protruding members 70 suppressing the movement of the hollow pipe 100 in the molding space 60 when the molten metal material is injected into the molding space 60. According to the above-described embodiment, the hollow pipe 100 is kept at a predetermined position in the molding space 60 by the protruding members 70. Therefore, the cast item 140 including the hollow pipe 100 placed at a predetermined position with high precision is produced.

In the mold 20 in this embodiment, the protruding members 70 may be formed integrally with the mold body 25. According to the above-described embodiment, the protruding members 70 are not shifted with respect to the mold body 25. Therefore, the cast item 140 including the hollow pipe 100 placed at a predetermined position with high precision is produced.

In the mold 20 in this embodiment, the protruding members 70 protrude into the molding space 60 from the inner surface of the mold body 25. According to the above-described embodiment, the protruding members 70 are put into contact with the hollow pipe 100, so that the movement of the hollow pipe 100 is suppressed easily.

In the mold 20 in this embodiment, the plurality of protruding members 70 may respectively be provided to be positioned between adjacent ones of the engaged portions 113 when the hollow pipe 100 is placed in the molding space 60. According to the above-described embodiment, the movement of the engaged portions 113 in a predetermined direction (in this embodiment, in the second direction D2) is suppressed with more certainty. Therefore, the cast item 140 including the hollow pipe 100 placed at a predetermined position with high precision is produced.

In the mold 20 in this embodiment, the plurality of protruding members 70 may protrude have an equal amount of protrusion to each other from the inner surface of the mold body 25 (e.g., the inner surface 40A of the movable mold 40). According to the above-described embodiment, the protruding members 70 are formed easily.

In the mold 20 in this embodiment, the amount of protrusion of a part of the plurality of protruding members 70 from the inner surface of the mold body 25 (e.g., the inner surface 40A of the movable mold 40), and the amount of protrusion of another part of the plurality of protruding members 70 from the inner surface of the mold body 25 (e.g., the inner surface 40A of the movable mold 40), may be different from each other. According to the above-described embodiment, any of various types of the protruding members 70 is usable in accordance with the shape of the hollow pipe 100.

In the mold 20 in this embodiment, the interval between the tips of adjacent ones of the protruding members 70 may be wider than the interval between the bases thereof. According to the above-described embodiment, the engaged portions 113 of the hollow pipe 100 are placed easily between adjacent ones of the protruding members 70 when the hollow pipe 100 is placed in the molding space 60.

In the mold 20 in this embodiment, a part of the plurality of protruding members 70 may be provided on a first inner surface (e.g., the inner surface 30A of the fixed mold 30) whereas another part of the plurality of protruding members 70 may be provided on a second inner surface (e.g., the inner surface 40A of the movable mold 40). According to the above-described embodiment, the movement of the hollow pipe 100 is suppressed at various angles by the protruding members 70. Therefore, even if the flow of the molten metal material injected into the molding space 60 is complicated, the movement of the hollow pipe 100 is suppressed with more certainty.

In the mold 20 in this embodiment, a part of the plurality of protruding members 70 may be provided on the inner surface 30A of the fixed mold 30 whereas another part of the plurality of protruding members 70 may be provided on the inner surface 40A of the movable mold 40. According to the above-described embodiment, the hollow pipe 100 is merely attached to, for example, the movable mold 40, so that the movement of the hollow pipe 100 is suppressed by the protruding members 70 on the movable mold 40 and the protruding members 70 on the fixed mold 30.

In the mold 20 in this embodiment, a part of the plurality of protruding members 70 may be provided on the inner surface 50A of the core 50. According to the above-described embodiment, the hollow pipe 100 is merely attached to, for example, the movable mold 40, so that the movement of the hollow pipe 100 is suppressed with more certainty by the protruding members 70 on the movable mold 40, the protruding members 70 on the fixed mold 30 and the protruding members 70 on the core 50.

In the mold 20 in this embodiment, the protruding members 70 may be detachably provided on the mold body 25. According to the above-described embodiment, the shape of the protruding members 70 is easily changeable in accordance with the shape of the hollow pipe 100. The protruding members 70 are separate from the mold body 25, and therefore, the mold body 25 is formed easily. In addition, the protruding members 70 are replaceable easily in the case of being damaged.

In the mold 20 in this embodiment, the protruding members 70 are configured to suppress the movement of the middle portion 110 of the hollow pipe 100 in the second direction D2. According to the above-described embodiment, the position in the second direction D2 of the middle portion 110 of the hollow pipe 100 is kept. Therefore, the cast item 140 including the hollow pipe 100 placed at a predetermined position with high precision is produced.

In the mold 20 in this embodiment, the middle portion 110 is formed to have a spiral shape extending in the second direction D2. According to the above-described embodiment, the movement of the middle portion 110 in the second direction D2 is suppressed by the protruding members 70 although the middle portion 110 formed to be spiral would otherwise be easily movable in the second direction D2 when the molten metal material flows into the molding space 60. Therefore, the cast item 140 including the hollow pipe 100 placed at a predetermined position with high precision is produced.

In the mold 20 in this embodiment, the protruding members 70 protrude toward the hollow pipe 100 from the inner surface of the mold body 25, and at least tip portions of the protruding members 70 (e.g., the tapering portions 71B) are formed to have a diameter decreasing toward the tips thereof. According to the above-described embodiment, the position of the middle portion 110 of the hollow pipe 100 is kept with more certainty. Therefore, the cast item 140 including the hollow pipe 100 placed at a predetermined position with high precision is produced. The middle portion 110 of the hollow pipe 100 is positioned easily between the protruding members 70 lined up in the second direction D2. This improves the ease of work of attaching the hollow pipe 100 to the mold 20.

In the mold 20 in this embodiment, the protruding members 70 and the protruding portions 152 are configured to suppress the movement of the middle portion 110 in a direction crossing the second direction D2. According to the above-described embodiment, the position in the radial direction of the middle portion 110 of the hollow pipe 100 is kept. Therefore, the cast item 140 including the hollow pipe 100 placed at a predetermined position with high precision is produced. The protruding members 70 and the protruding portions 152 are configured to suppress the movement of the middle portion 110 in a direction perpendicularly crossing the second direction D2.

In the mold 20 in this embodiment, the protruding portions 152 are formed on the outer circumferential surface 150S of the slidable core 150 and protrude toward the middle portion 110. According to the above-described embodiment, even if there is a force that acts to move the middle portion 110 of the hollow pipe 100 in the radially inward direction, the position in the radial direction of the middle portion 110 is kept by the protruding portions 152 protruding toward the middle portion 110. Therefore, the cast item 140 including the hollow pipe 100 placed at a predetermined position with high precision is produced.

In the mold 20 in this embodiment, the protruding portions 152 extend in the second direction D2. According to the above-described embodiment, the position of the middle portion 110 is kept in a wider range of the second direction D2. Therefore, the cast item 140 including the hollow pipe 100 placed at a predetermined position with high precision is produced.

In the mold 20 in this embodiment, in a state where the middle portion 110 has the slidable core 150 inserted thereto, the protruding portions 152 are provided to at least partially face the second discharge opening 62 and the third discharge opening 63. According to the above-described embodiment, the protruding portions 152 suppress the movement of the middle portion 110 in the radial direction although the middle portion 110 would otherwise be easily moved in the radial direction by the force of the molten metal material flowing into the molding space 60 through the second discharge opening 62 and the third discharge opening 63. For the above-described reason, the cast item 140 including the hollow pipe 100 placed at a predetermined position with high precision is produced.

In the mold 20 in this embodiment, the slidable core 150 is formed to be cylindrical, and the plurality of protruding portions 152 away from each other in the circumferential direction of the slidable core 150 are formed on the outer circumferential surface 150S of the slidable core 150. According to the above-described embodiment, the position of the middle portion 110 is kept in a wider range of the circumferential direction. Therefore, the cast item 140 including the hollow pipe 100 placed at a predetermined position with high precision is produced.

In the mold 20 in this embodiment, in a state where the middle portion 110 has the slidable core 150 inserted thereto, as seen in the second direction D2, the protruding portion 152A is positioned between the fixed mold-side protruding members 71 and the movable mold-side protruding members 72 in the circumferential direction of the middle portion 110. According to the above-described embodiment, the position of the middle portion 110 is kept in a wider range of the circumferential direction by the protruding portion 152A, the fixed mold-side protruding members 71 and the movable mold-side protruding members 72. Therefore, the cast item 140 including the hollow pipe 100 placed at a predetermined position with high precision is produced.

According to the production method in this embodiment, in the placement step (step S20), the hollow pipe 100 is caused to be held by the holding portions 42 and is placed in the molding space 60 such that the hollow pipe 100 is in contact with the protruding members 70. According to the above-described embodiment, when, in the filling step (step S50), the molten metal material is injected into the molding space 60 through the injection opening 65 to fill the molding space 60 with the molten metal material, the movement of the hollow pipe 100 in the molding space 60 is suppressed by the protruding members 70. Therefore, the hollow pipe 100 is kept at a predetermined position in the molding space 60, and thus the cast item 140 including the hollow pipe 100 placed at a predetermined position with high precision is produced.

The production method in this embodiment may further include the fluid filling step (step S40) of injecting the non-compressive fluid through the first end 102 of the hollow pipe 100 to fill the hollow pipe 100 with the non-compressive fluid before the filling step (step S50). According to the above-described embodiment, the hollow pipe 100 is filled with the non-compressive fluid in a state where the hollow pipe 100 is placed in the molding space 60. Therefore, there is no undesirable possibility that the non-compressive fluid is splattered in, or leaked to, the molding space 60 when the hollow pipe 100 is placed in the molding space 60.

The production method in this embodiment may further include the discharge step (step S60) of discharging the non-compressive fluid filling the hollow pipe 100 before the removal step (step S70). According to the above-described embodiment, the non-compressive fluid is discharged from the hollow pipe 100 before the cast item 140 is removed from the mold 20. Therefore, there is no undesirable possibility that the non-compressive fluid is splattered outside when the cast item 140 is removed from the mold 20.

In the cast item 140 in this embodiment, as seen in the second direction D2, the metal member 120 includes the inner circumferential surface 122 placed radially inner to the middle portion 110 and the recessed portions 124 recessed radially outward from the inner circumferential surface 122. According to the above-described embodiment, the inner circumferential surface 122 of the metal member 120 has a larger surface area, and therefore, the ease of cooling is improved.

In the cast item 140 in this embodiment, the recessed portions 124 extend in the second direction D2. According to the above-described embodiment, the inner circumferential surface 122 of the metal member 120 has a larger surface area, and therefore, the ease of cooling is improved.

In the cast item 140 in this embodiment, the recessed portions 124 are opened in the second direction D2 at one of two ends in the second direction D2 of the inner circumferential surface 122. According to the above-described embodiment, the inner circumferential surface 122 of the metal member 120 has a larger surface area, and therefore, the ease of cooling is improved.

In the cast item 140 in this embodiment, the recessed portions 124 may be opened in the second direction D2 at the other of the two ends in the second direction D2 of the inner circumferential surface 122. According to the above-described embodiment, the inner circumferential surface 122 of the metal member 120 has a larger surface area, and therefore, the ease of cooling is improved.

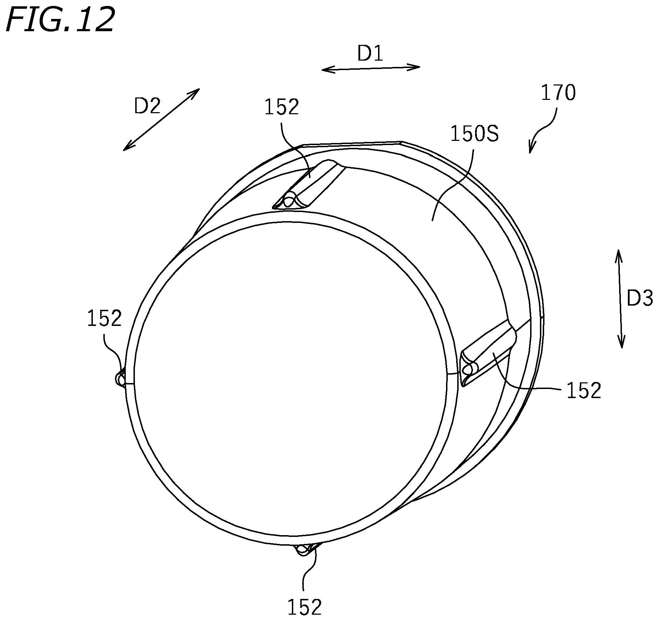

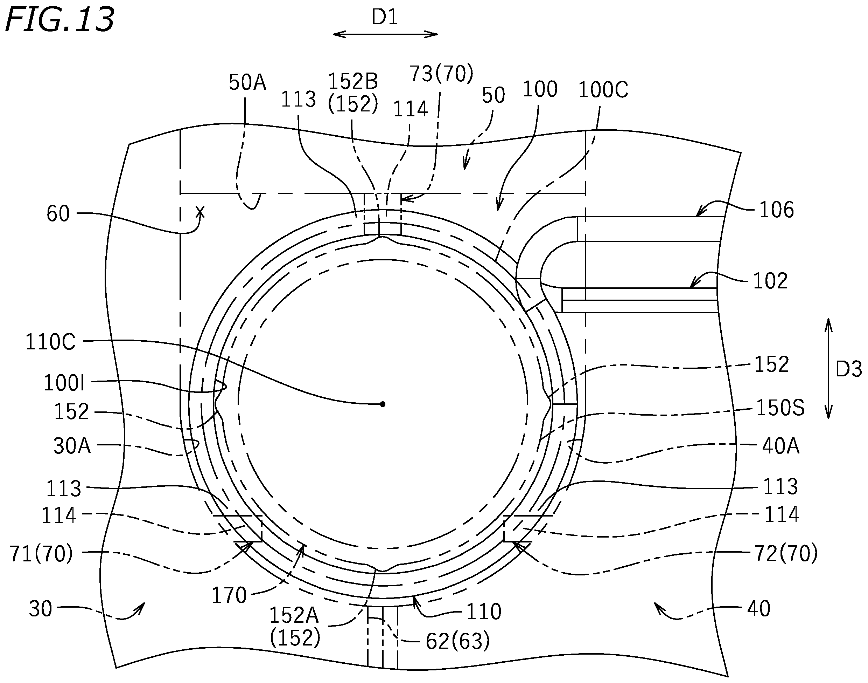

Fig. 12 is a perspective view of a slidable core 170 according to a modification. As shown in Fig. 12, the slidable core 170 includes four protruding portions 152. The four protruding portions 152 are provided at an equal interval in the circumferential direction of the outer circumferential surface 150S. The slidable core 170 has substantially the same configuration as that of the slidable more 150 except for including four protruding portions 152. As shown in Fig. 13, in a state where the middle portion 150 has the slidable core 170 inserted thereto, as seen in the second direction D2, the protruding portions 152 are provided at positions facing the protruding members 70. In this embodiment, for example, a protruding portion 152B is provided at a position facing at least a part of the core-side protruding members 73. In the case where the cast item 140 is produced by use of the slidable core 170, the metal member 120 includes four recessed portions 124.

In the mold 20 in this embodiment, in a state where the middle portion 110 has the slidable core 170 inserted thereto, as seen in the second direction D2, the protruding portion 152B is provided at a position facing at least a part of the core-side protruding members 73. According to the above-described embodiment, the position of the middle portion 110 is kept in a wider range of the circumferential direction by the protruding portion 152B and the core-side protruding members 73. Therefore, the cast item 140 including the hollow pipe 100 placed at a predetermined position with high precision is produced.

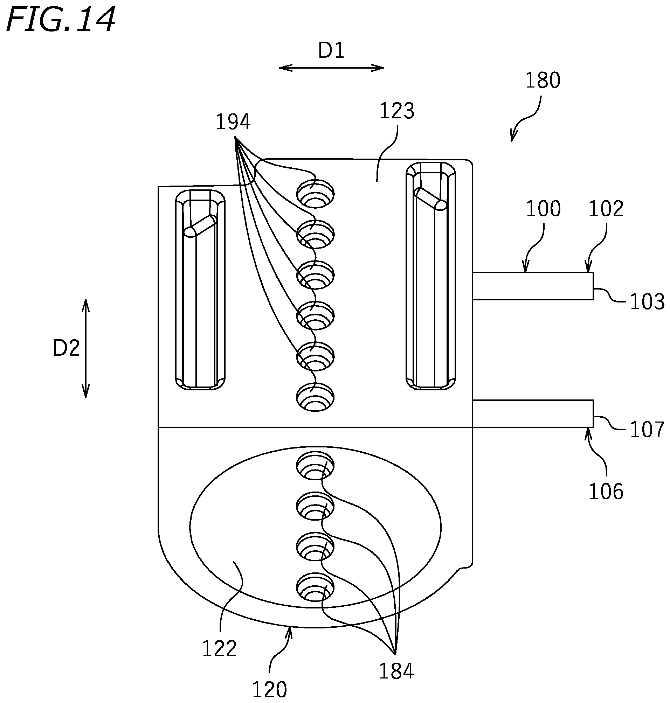

Fig. 14 is a perspective view of a cast item 180 according to a modification. As shown in Fig. 14, the metal member 120 includes a plurality of recessed portions 184 recessed in the radially outward direction from the inner circumferential surface 122. The plurality of recessed portions 184 are lined up in the second direction D2. The recessed portions 184 are formed to be circular as seen in the radial direction. The recessed portions 184 are not limited to having a circular shape, and may have a rectangular shape, an elliptical shape or the like. The recessed portions 184 are formed to have a diameter increasing from the radially outer side toward the radially inner side. A part of the middle portion 110 may be exposed outside in the recessed portions 184. The metal member 120 includes a plurality of another recessed portions 194 recessed in the radially inward direction from the outer circumferential surface 123. The plurality of another recessed portions 194 are lined up in the second direction D2. The another recessed portions 194 are formed to be circular as seen in the radial direction. The another recessed portions 194 are not limited to having a circular shape, and may have a rectangular shape, an elliptical shape or the like. The another recessed portions 194 are formed to have a diameter increasing from the radially inner side toward the radially outer side. A part of the middle portion 110 may be exposed outside in the another recessed portions 194.

In the cast item 180 in this embodiment, the metal member 120 includes the plurality of recessed portions 184 lined up in the second direction D2. According to the above-described embodiment, the inner circumferential surface 122 of the metal member 120 has a larger surface area, and therefore, the ease of cooling is improved.

In the cast item 180 in this embodiment, the recessed portions 184 are formed to be circular as seen in a direction which perpendicularly crosses the second direction D2 and in which a straight line passing a center of each of the recessed portions 184 extends. According to the above-described embodiment, as compared with a case where the recessed portions 184 are formed to be, for example, rectangular, breakage of the cast item 180 is suppressed although the recessed portions 184 are formed in a surface of the cast item 180.

In the cast item 180 in this embodiment, the recessed portion 184 are formed to have a diameter increasing from the radially outer side toward the radially inner side. According to the above-described embodiment, the recessed portions 184 have a diameter increasing toward a surface of the metal member 120. That is, the recessed portions 184 are formed to have a diameter decreasing toward the side opposite to the surface of the metal member 120. Therefore, the inside of the recessed portions 184 is inspected easily after the completion, for example.

### <Embodiment 2>

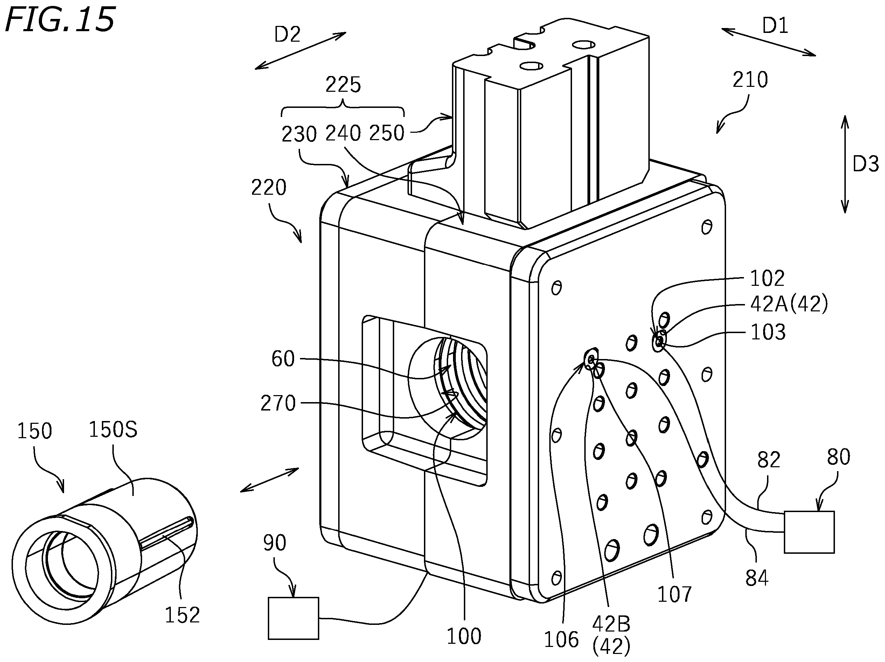

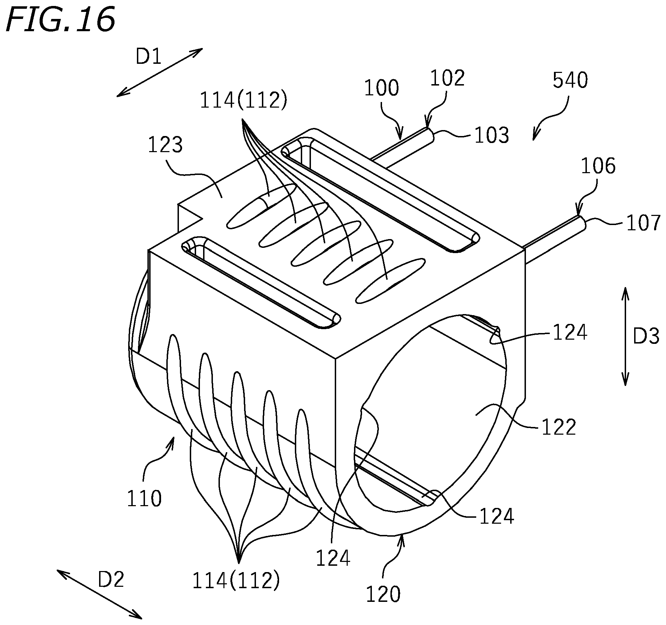

Fig. 15 is a schematic view of a cast item production device 210 according to this embodiment. The cast item production device 210 produces a cast item 540 (see Fig. 16) including the hollow pipe 100 (see Fig. 2) and the metal member 120 cast around the hollow pipe 100. As shown in Fig. 15, the cast item production device 210 includes a mold 220, the filler transportation device 80, and the metal material transportation device 90.

As shown in Fig. 16, the cast item 540 includes the hollow pipe 100 and the metal member 120 cast around the hollow pipe 100. The hollow pipe 100 and the metal member 120 are integrated with each other. Of the hollow pipe 100, a part of the first end 102, a part of the second end 106 and a part of the middle portion 110 (i.e., a part of the curved portions 112) are covered with the metal member 120. A part, of the first end 102, that includes the injection opening 103, a part, of the second end 106, that includes the discharge opening 107, and a part of the middle portion 110 are exposed outside from the metal member 120. The middle portion 110 includes a plurality of exposed portions 114 exposed outside from the metal member 120 and lined up in the second direction D2. The exposed portions 114 are respectively parts of the curved portions 112 (see Fig. 3A). The exposed portions 114 are respectively parts of the engaged portions 113 (see Fig. 3A). The cast item 540 is usable as, for example, a motor housing or the like.

As shown in Fig. 15, the mold 220 includes a mold body 225. The mold body 225 includes a fixed mold 230, a movable mold 240 movable toward, or away from, the fixed mold 230, a core 250 at least partially positioned between the fixed mold 230 and the movable mold 240, and a slidable core 250 at least partially positioned between the fixed mold 230 and the movable mold 240.

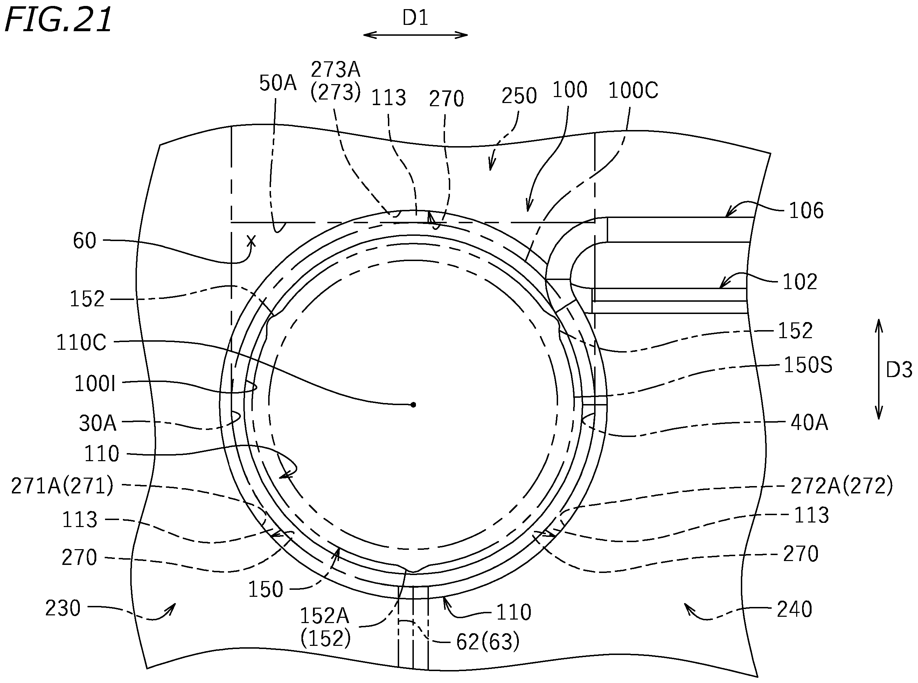

The mold 220 includes a plurality of recessed grooves 270 (see Fig. 21), formed therein, suppressing movement of the hollow pipe 100 in the molding space 60 when a molten metal material is injected into the molding space 60. The recessed grooves 270 are formed in an inner surface of the mold body 225. The recessed grooves 270 are each an example of suppressing member. The recessed grooves 270 each have a depth substantially equal to a radius (half of an outer diameter) of the hollow pipe 100. The depth of the recessed grooves 270 may be shallower or deeper than the radius of the hollow pipe 100 as long as the recessed grooves 270 suppress the movement of the engaged portions 113 placed in the recessed grooves 270. The recessed grooves 270 may all have an equal depth to each other, or may have different depths from each other. As shown in Fig. 21, the recessed grooves 270 include fixed-side recessed grooves 271 provided in the fixed mold 230, movable mold-side recessed grooves 272 provided in the movable mold 240, and core-side recessed grooves 273 provided in the core 250. The depth of the fixed-side recessed grooves 271, the depth of the movable mold-side recessed grooves 272 and the depth of the core-side recessed grooves 273 may be equal to, or different from, each other. Some of the depths may be equal to each other, and may be different from the other of the depths.

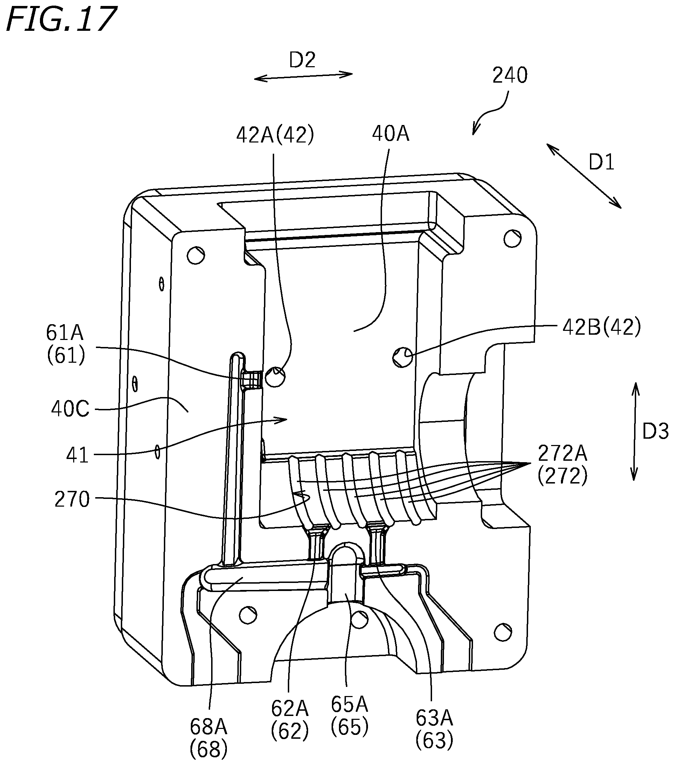

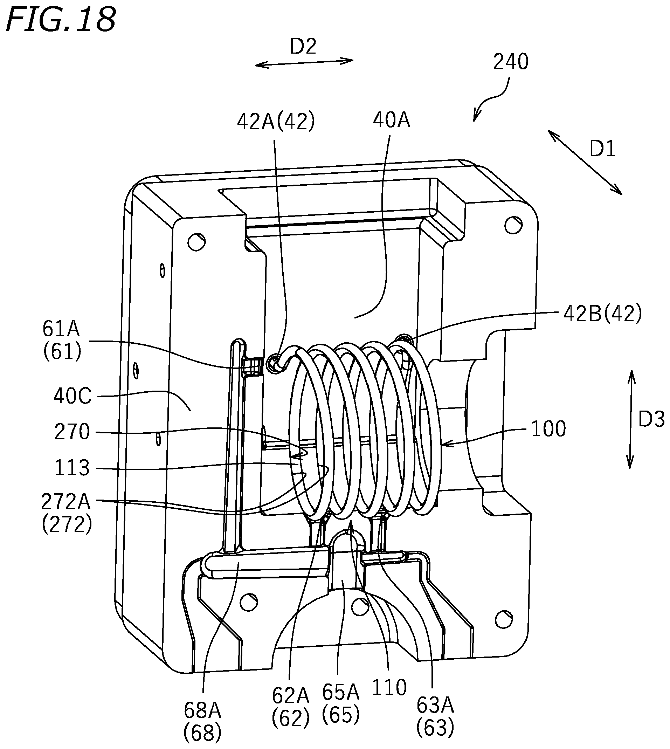

As shown in Fig. 17, the movable mold-side recessed grooves 272 are provided in the movable mold 240. A part of the middle portion 110 of the hollow pipe 100 is placed in the movable mold-side recessed grooves 272. The movable mold-side recessed grooves 272 are formed to be capable of holding the hollow pipe 100. The movable mold-side recessed grooves 272 are formed in the inner surface 40A of the movable hold 240. The movable mold-side recessed grooves 272 extend in the third direction D3. The movable mold-side recessed grooves 272 each have a semi-circular cross-section. The movable mold-side recessed grooves 272 are positioned below the first holding portion 42A and the second holding portion 42B. The movable mold-side recessed grooves 272 include a plurality of engaging grooves 272A, which allow the engaged portions 113 of the hollow pipe 100 to be fit thereto when the hollow pipe 100 is placed in the molding space 60. The plurality of engaging grooves 272A are lined up in the second direction D2 at an equal interval. Adjacent ones of the engaging grooves 272A have a pitch that is equal to that of adjacent ones of the curved portions 112 of the hollow pipe 100. The engaging grooves 272A each have a semi-circular cross-section. As shown in Fig. 18, the plurality of engaging grooves 272A are provided to be contactable with the hollow pipe 100 (in more detail, the engaged portions 113). The engaging grooves 272A are formed to be capable of holding the engaged portions 113. In this embodiment, five engaging grooves 272A are provided in the movable mold 240. The number of the engaging grooves 272A is not limited to five. The plurality of engaging grooves 272A have an equal length to each other in the third direction D3. The plurality of engaging grooves 272A may have different lengths from each other in the third direction D3. For example, the length of a part of the plurality of engaging grooves 272A in the third direction D3 and the length of another part of the plurality of engaging grooves 272A in the third direction D3 may be different from each other.

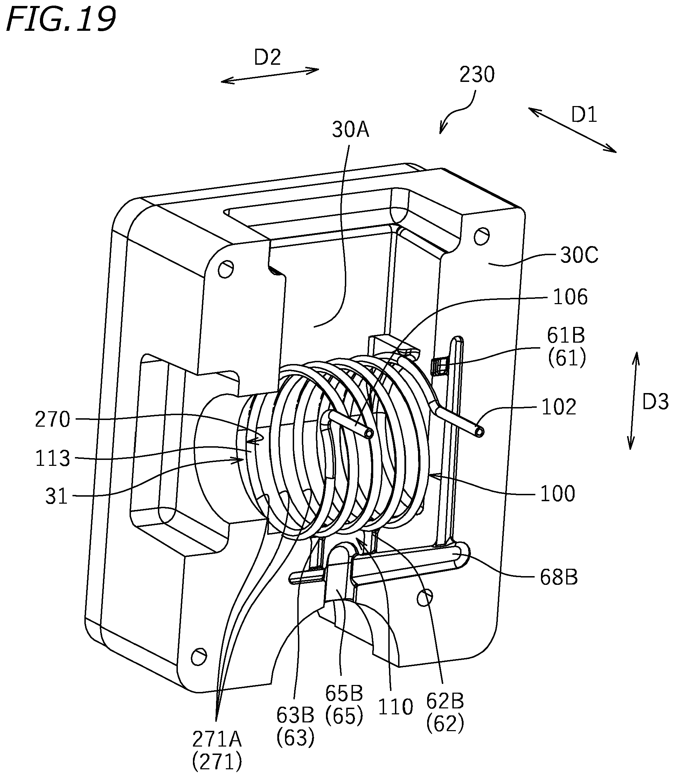

As shown in Fig. 19, the fixed-side engaging grooves 271 are provided in the fixed mold 230. Apart of the middle portion 110 of the hollow pipe 100 is placed in the fixed-side recessed grooves 271. The fixed mold-side recessed grooves 271 are formed to be capable of holding the hollow pipe 100. The fixed mold-side recessed grooves 271 are formed in the inner surface 30A of the fixed mold 230. The fixed mold-side recessed grooves 271 extend in the third direction D3. The fixed mold-side recessed grooves 271 each have a semi-circular cross-section. The fixed mold-side recessed grooves 271 include a plurality of engaging grooves 271A, into which the engaged portions 113 of the hollow pipe 100 are fit when the hollow pipe 100 is placed in the molding space 60. The plurality of engaging grooves 271A are lined up in the second direction D2 at an equal interval. Adjacent ones of the engaging grooves 271A have a pitch that is equal to that of adjacent ones of the curved portions 112 of the hollow pipe 100. The engaging grooves 271A each have a semi-circular cross-section. The plurality of engaging grooves 271A are provided to be contactable with the hollow pipe 100 (in more detail, the engaged portions 113). The engaging grooves 271A are formed to be capable of holding the engaged portions 113. In this embodiment, five engaging grooves 271Aare provided in the fixed mold 230. The number of the engaging grooves 271A is not limited to five. The plurality of engaging grooves 271A have an equal length to each other in the third direction D3. The plurality of engaging grooves 271A may have different lengths from each other in the third direction D3. For example, the length of a part of the plurality of engaging grooves 271A in the third direction D3 and the length of another part of the plurality of engaging grooves 271A in the third direction D3 may be different from each other. When the mold 220 is closed, the engaging grooves 272A (see Fig. 17) in the movable mold-side recessed grooves 272 are continuous with the engaging grooves 271A in the fixed mold-side recessed grooves 271.

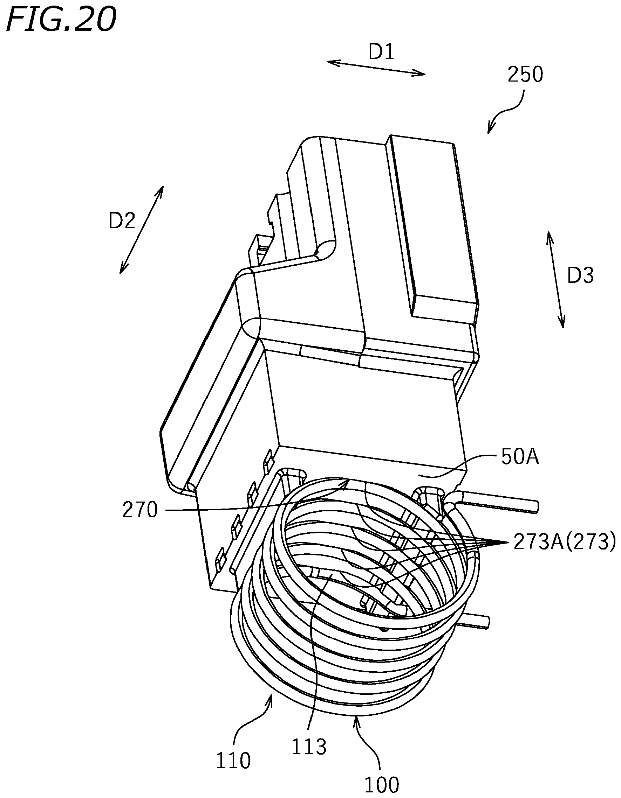

As shown in Fig. 20, the core-side recessed grooves 273 are provided in the core 250. A part of the middle portion 110 of the hollow pipe 100 is placed in the core-side recessed grooves 273. The core-side recessed grooves 273 are formed to be capable of holding the hollow pipe 100. The core-side recessed grooves 273 are formed in the inner surface 50A of the core 250. The core-side recessed grooves 273 extend in the first direction D1. The core-side recessed grooves 273 each have a semi-circular cross-section. The core-side recessed grooves 273 include a plurality of engaging grooves 273A, into which the engaged portions 113 of the hollow pipe 100 are fit when the hollow pipe 100 is placed in the molding space 60. The plurality of engaging grooves 273A are lined up in the second direction D2 at an equal interval. Adjacent ones of the engaging grooves 273A have a pitch that is equal to that of adjacent ones of the curved portions 112 of the hollow pipe 100. The engaging grooves 273A each have a semi-circular cross-section. The plurality of engaging grooves 273A are provided to be contactable with the hollow pipe 100 (in more detail, the engaged portions 113). The engaging grooves 273A are formed to be capable of holding the engaged portions 113. In this embodiment, five engaging grooves 273A are provided in the core 250. The number of the engaging grooves 273A is not limited to five. The plurality of engaging grooves 273A have an equal length to each other in the first direction D1. The plurality of engaging grooves 273A may have different lengths from each other in the first direction D1. For example, the length of a part of the plurality of engaging grooves 273A in the first direction D1 and the length of another part of the plurality of engaging grooves 273A in the first direction D1 may be different from each other.

As shown in Fig. 21, in a state where the hollow pipe 100 is placed in the molding space 60, the movable mold-side recessed grooves 272, the fixed mold-side recessed grooves 271 and the core-side recessed grooves 273 hold the engaged portions 113 of the hollow pipe 100, and therefore, suppress the movement of the hollow pipe 100 (especially, the movement of the middle portion 110 in the radially outward direction and in the second direction D2). In a state where the hollow pipe 100 is placed in the molding space 60, the engaged portions 113 of the hollow pipe 100 are fit into the engaging grooves 272A of the movable mold-side recessed grooves 272, the engaging grooves 271A of the fixed mold-side recessed grooves 271 and the engaging grooves 273A of the core-side recessed grooves 273. Therefore, the middle portion 110 of the hollow pipe 100 is kept at a predetermined position. In this embodiment, the core-side recessed grooves 273 are positioned above a center in the third direction D3 of the middle portion 110 of the hollow pipe 100 and in a central area in the first direction D1 of the middle portion 110. The movable mold-side recessed grooves 272 are positioned below the center in the third direction D3 of the middle portion 110 of the hollow pipe 100 and on the side of the first end 102 with respect to a center in the first direction D1 of the middle portion 110. The fixed mold-side recessed grooves 271 are positioned below the center in the third direction D3 of the middle portion 110 of the hollow pipe 100 and on the side opposite to the first end 102 with respect to the center in the first direction D1 of the middle portion 110. As seen along the center line 110C of the middle portion 110 (i.e., as seen in the second direction D2), the inner surface 30A of the fixed mold 30, the inner surface 40A of the movable mold 40 and the inner surface 50A of the core 50 overlap the center line 100C of the hollow pipe 100. Therefore, the recessed grooves 270 suppress the movement of the hollow pipe 100 in the molding space 60 with certainty, and hollow pipe 100 is kept at a predetermined position in the molding space 60 with certainty. In addition, as seen along the center line 110C of the middle portion 110, the inner surface 30A of the fixed mold 30, the inner surface 40A of the movable mold 40 and the inner surface 50A of the core 50 may be positioned on the side of the center line 110C of the middle portion 110 with respect to the center line 100C of the hollow pipe 100. In this case, the recessed grooves 270 suppress the movement of the hollow pipe 100 in the molding space 60 with more certainty, and the hollow pipe 100 is kept at a predetermined position with more certainty. It is not necessary that the inner surface 30A of the fixed mold 30, the inner surface 40A of the movable mold 40 and the inner surface 50A of the core 50 all have the above-described relationship. It is sufficient that the inner surface 30A, the inner surface 40A and the inner surface 50A at least partially have the above-described relationship.

In the mold 220 in this embodiment, the recessed grooves 270 are formed in the mold body 225. According to the above-described embodiment, the hollow pipe 100 is placed in the recessed grooves 270, so that the movement of the hollow pipe 100 is suppressed easily.

In the mold 220 in this embodiment, the recessed grooves 270 may be formed to be capable of holding the hollow pipe 100. According to the above-described embodiment, the hollow pipe 100 is held by the recessed grooves 270. Therefore, the movement of the hollow pipe 100 is suppressed with more certainty.

In the mold 220 in this embodiment, the recessed grooves 270 include the plurality of engaging grooves 271A, 272A and 273A, into which the engaged portions 113 are fit when the hollow pipe 100 is placed in the molding space 60 and which are lined up in a predetermined direction. According to the above-described embodiment, the movement of the engaged portions 113 in a predetermined direction (e.g., in the second direction D2) is suppressed with more certainty. Therefore, the cast item 540 including the hollow pipe 100 placed at a predetermined position with high precision is produced.

In the mold 220 in this embodiment, the hollow pipe 100 may have a circular cross-section, and the recessed grooves 270 may each have a semi-circular cross-section. According to the above-described embodiment, the hollow pipe 100 is placed in the recessed grooves 270 easily.

In the cast item 540 in this embodiment, a part of the middle portion 110 of the hollow pipe 100, that is, a part, of the middle portion 110. that is in contact with bottom portions of the recessed grooves 270 are exposed outside from the metal member 120. According to the above-described embodiment, the ease of heat dissipation of a solvent or the like passing the inside of the hollow pipe 100 is improved. In addition, the remaining part of the middle portion 110 is not exposed outside from the metal member 120, and therefore, is protected by the metal member 120. In this manner, a part of the middle portion 110 is exposed outside from the metal member 120, so that the cast item 540 optimum for the purpose or environment of use thereof is provided.

In the cast item 540 in this embodiment, the middle portion 110 includes the plurality of exposed portions 114 exposed outside from the metal member 120 and lined up in a predetermined direction (e.g., in the second direction D2). According to the above-described embodiment, the plurality of exposed portions 114 are exposed outside from the metal material 120. Therefore, the ease of heat dissipation of a solvent or the like passing the inside of the hollow pipe 100 is further improved.

In the cast item 540 in this embodiment, the middle portion 110 may be formed to be spiral and may include the curved portions 112 curved in an arcked shape. The curved portions 112 may partially be exposed outside from the metal member 120. According to the above-described embodiment, the ease of heat dissipation of a solvent or the like passing the inside of the hollow pipe 100 is improved.

In the cast item 540 in this embodiment, the middle portion 110 may include the plurality of curved portions 112 lined up in a predetermined direction. According to the above-described embodiment, the plurality of curved portions 112 are exposed outside from the metal member 120. Therefore, the ease of heat dissipation of a solvent or the like passing the inside of the hollow pipe 100 is further improved.

In the cast item 540 in this embodiment, a part of the middle portion 110 may be exposed outside in the recessed portions 124. According to the above-described embodiment, the ease of heat dissipation of a solvent or the like passing the inside of the hollow pipe 100 is further improved.

Preferred embodiments of the present invention have been described above. The above-described embodiments are merely examples, and the present invention may be carried out in any of various other embodiments.

In Embodiment 1 described above, the fixed mold 30, the movable mold 40 and the core 50 each include the protruding members 70. The present invention is not limited to this. For example, one of the fixed mold 30 and the movable mold 40 may include the protruding members 70, whereas the other of the fixed mold 30 and the movable mold 40 may include the recessed grooves 270 formed therein. The core 50 may include the recessed grooves 270 instead of the protruding members 70. According to such an embodiment, the movement of the hollow pipe 100 is suppressed with more certainty.

In Embodiment 2 described above, the fixed mold 230, the movable mold 240 and the core 250 each include the recessed grooves 270 formed therein. The present invention is not limited to this. For example, one of the fixed mold 230 and the movable mold 240 may include the protruding members 70, whereas the other of the fixed mold 230 and the movable mold 240 may include the recessed grooves 270 formed therein. The core 250 may include the protruding members 70 instead of the recessed grooves 270. According to such an embodiment, the movement of the hollow pipe 100 is suppressed with more certainty.

In Embodiment 1 described above, the mold 20 includes the core 50. The mold 20 does not need to include the core 50. In Embodiment 2 described above, the mold 220 include the core 250. The mold 220 does not need to include the core 250.

In Embodiment 1 described above, the protruding members 70 include the fixed mold-side protruding members 71 provided in the fixed mold 30, the movable mold-side protruding members 72 provided in the movable mold 40, and the core-side protruding members 73 provided in the core 50. The present invention is not limited to this. It is sufficient that the protruding members 70 include at least one type of the protruding members 70 among the fixed mode-side protruding members 71, the movable mold-side protruding members 72 and the core-side protruding members 73.

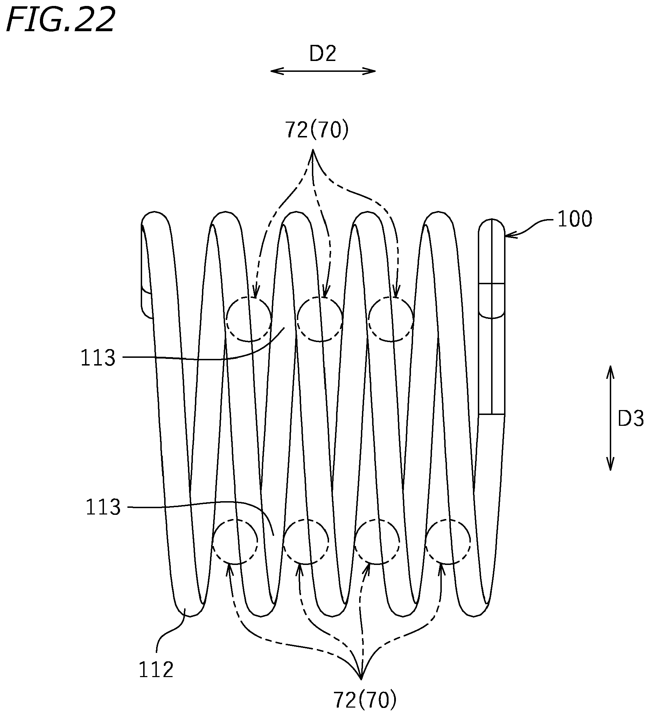

In Embodiment 1 described above, the movable mold-side protruding members 72 are lined up straight in the second direction D2. The present invention is not limited to this. For example, as shown in Fig. 22, the movable mold-side protruding members 72 may be placed as being shifted in the third direction D3 to each other. The fixed mold-side protruding members 71 are not limited to being lined up straight in the second direction D2, either. The fixed mold-side protruding members 71 may be placed as being shifted in the third direction D3 to each other. The core-side protruding members 73 are not limited to being lined up straight in the second direction D2, either. The core-side protruding members 73 may be placed as being shifted in the first direction D1 to each other.

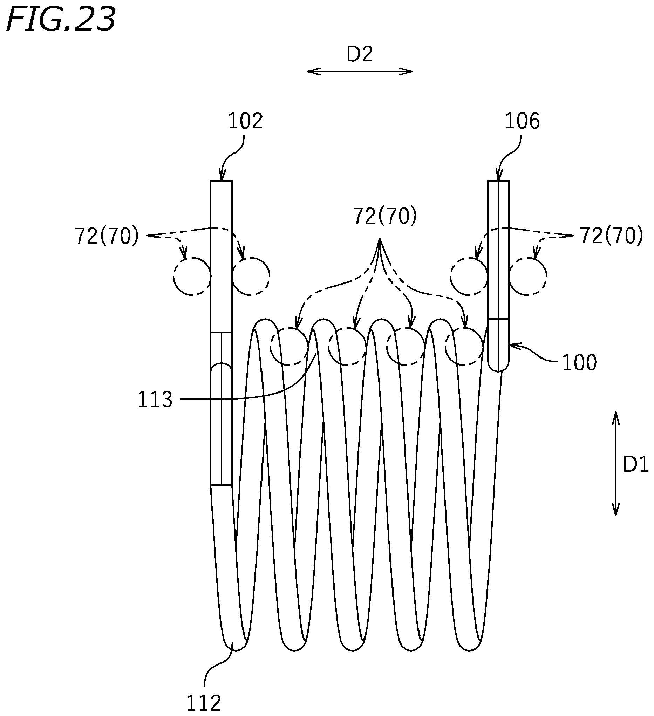

In Embodiment 1 described above, the plurality of movable mold-side protruding members 72 are respectively placed to be positioned between adjacent ones of the engaged portions 113 when the hollow pipe 100 is placed in the molding space 60. The present invention is not limited to this. As shown in Fig. 23, the movable mold-side protruding members 72 may be placed at positions not adjacent to the engaged portions 113 (e.g., at positions sandwiching the first end 102 or at positions sandwiching the second end 106).

In the above-described embodiment, the injection opening 65 is defined by the movable mold-side injection opening 65A formed in the movable mold 40 and the fixed mold-side injection opening 65B formed in the fixed mold 30. The present invention is not limited to this. For example, the injection opening 65 may be formed by the movable mold 40, the fixed mold 30 and the core 50, and may be defined by the movable mold-side injection opening 65A, the fixed mold-side injection opening 65B and also a core-side injection opening formed in the core 50.

In the above-described embodiment, in a state where the hollow pipe 100 is placed in the molding space 60 (i.e., in a state where the hollow pipe 100 is attached to the movable mold 40), the middle portion 110 of the hollow pipe 100 is not in contact with the inner surface 40A of the movable mold 40, the inner surface 30A of the fixed mold 30 or the inner surface 50A of the core 50. Alternatively, a part of the middle portion 110 may be in contact with a part of the inner surface 40A, a part of the inner surface 30A and a part of the inner surface 50A.

In the above-described embodiments, in a state where the hollow pipe 100 is placed in the molding space 60 (i.e., in a state where the hollow pipe 100 is attached to the movable mold 40), all the protruding members 70 are in contact with the hollow pipe 100. However, in the case where a hollow pipe having a different shape or diameter is used for the same mold 20, different ones of the protruding members 70 may be in contact with the hollow pipe in accordance with the type of the hollow pipe. That is, a part of the protruding members 70 does not need to be in contact with the hollow pipe.

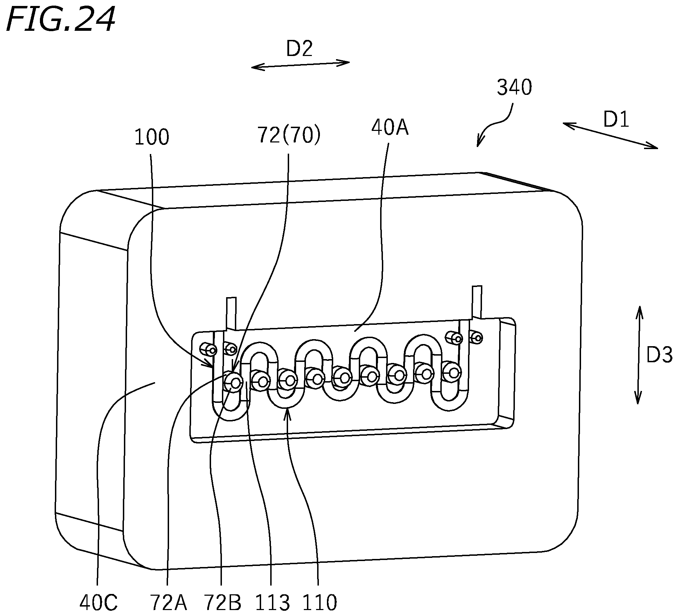

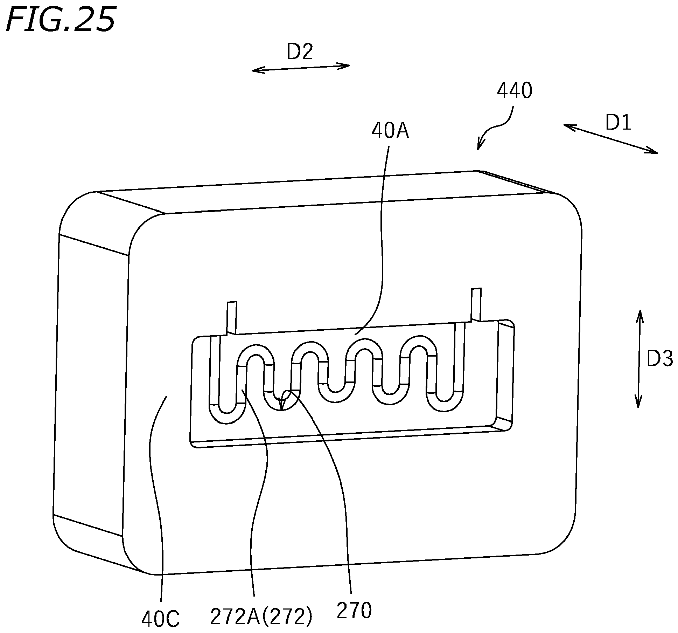

In the above-described embodiments, the hollow pipe 100 includes the middle portion 110 formed to be spiral. The shape of the hollow pipe 100 is not limited to this. For example, as shown in Fig. 24, the middle portion 110 may have a wave-like shape extending in a predetermined direction (in this embodiment, in the second direction D2). In this case, the cast item produced is like a flat plate. According to the above-described embodiment, the movement in the second direction D2 of the middle portion 110 formed to have such a wave-like shape is suppressed by the protruding members 70 although the middle portion 110 would otherwise move in the second direction D2 easily when a molten metal material flows into the molding space 60. For this reason, a cast item including the hollow pipe 100 placed at a predetermined position with high precision is produced. As shown in Fig. 24, a movable mold 340 may include the protruding members 70 substantially the same as those of the movable mold 40 in Embodiment 1. In this case, the amount of protrusion of the protruding members 70 from the inner surface 40A is such a length as to cause the middle portion 110 of the hollow pipe 100 to be positioned on the side of the inner surface 40A with respect to the tips of the protruding members 70. As shown in Fig. 25, a movable mold 440 may include the recessed grooves 270 formed therein that are substantially the same as those of the movable mold 240 in Embodiment 2.

In the above-described embodiments, in a state where the hollow pipe 100 is filled with the non-compressive fluid, the molten metal material is injected into the molding space 60 to fill the molding space 60 with the molten metal material. The present invention is not limited to this. For example, the molten metal material may be injected into the molding space 60 in a state where the hollow pipe 100 is not filled with the non-compressive fluid (i.e., in a state there the hollow pipe 100 is hollow) to fill the molding space 60 with the molten metal material.

In the above-described embodiments, the hollow pipe 100 is used as an example of pipe. Alternatively, a solid pipe may be used. In the case where a solid pipe is used, for example, the hollow pipe 100 is filled with a solid substance such as salt or the like, a filler such as a non-compressive fluid, or the like, and the pipe in such a solid state is placed in the molding space 60. For example, in the production method in the above-described embodiment, the fluid filling step (step S40) is performed after the placement step (step S20). Alternatively, the fluid filling step (step S40) may be performed before the placement step (step S20). That is, before the hollow pipe 100 is placed in the molding space 60, the hollow pipe 100 may be filled with, for example, a filler and the hollow pipe 100 in a solid state that is filled with the filler may be placed in the molding space 60. In this case, the filler filling the hollow pipe 100 may be discharged before the cast item 140 is removed from the mold 20 or may be discharged after the cast item 140 is removed from the mold 20.

Another specific embodiment of the technology disclosed herein may be as follows.

Item 1: A cast item production device includes a mold that includes a fixed mold and a movable mode movable toward, or away from, the fixed mold and is configured such that a pipe including a first straight line portion including a first end formed at one of two ends thereof, a second straight line portion including a second end formed at the other of the two ends thereof and parallel to the first straight line portion, and a main portion positioned between the first straight line portion and the second straight line portion is placed in a molding space formed by the movable mold and the fixed mold. The fixed mold or the movable mold includes a first holding portion allowing the first straight line portion to be inserted thereto and holding the first straight line portion and a second holding portion allowing the second straight line portion to be inserted thereto and holding the second straight line portion.

According to the above-described embodiment, the first straight line portion and the second straight line portion are parallel to each other, and the fixed mold or the movable mold includes the first holding portion allowing the first straight line portion to be inserted thereto and holding the first straight line portion and the second holding portion allowing the second straight line portion to be inserted thereto and holding the second straight line portion. Therefore, the ease of work of attaching the pipe to the fixed mold or the movable mold is improved. The pipe may be filled with a non-compressive fluid before the pipe is attached to the fixed mold or the movable mold, or the pipe in a hollow state may be attached to the fixed mold or the movable mold without being filled with the non-compressive fluid. The first holding portion and the second holding portion may be provided in the same mold, and the first straight line portion and the second straight line portion may be attached to the same mold. The first holding portion and the second holding portion are provided in the same mold, and the first straight line portion and the second straight line portion are attached to the same mold, so that the ease of work of attaching the pipe to the mold is further improved.

### Reference Signs List

- 10: cast item production device
- 20: mold
- 25: mold body
- 30: fixed mold
- 40: movable mold
- 42: holding portion
- 50: core
- 60: molding space
- 65: injection opening
- 70: protruding member (suppressing member)
- 71: fixed mold-side protruding member
- 72: movable mold-side protruding member
- 73: core-side protruding member
- 80: filler transportation device
- 90: metal material transportation device
- 100: hollow pipe (pipe)
- 102: first end
- 106: second end
- 110: middle portion
- 112: curved portion
- 113: engagaed portion
- 120: metal member
- 122: inner circumferential surface
- 124: recessed portion
- 140: cast item
- 150: slidable core
- 150S: outer circumferential surface
- 152: protruding portion (suppressing member)
- 270: recessed groove (suppressing member)

## Claims

1. A mold, comprising:
a mold body including a fixed mold and a movable mold movable toward, or away from, the fixed mold;
a molding space defined by at least the fixed mold and the movable mold and allowing a pipe to be placed therein;
an injection opening through which a molten metal material is allowed to be injected into the molding space;
a holding portion holding both of two ends of the pipe; and
a suppressing member suppressing movement of the pipe in the molding space when the molten metal material is injected into the molding space.

2. The mold according to claim 1, wherein the suppressing member is formed integrally with the mold body.

3. The mold according to claim 1 or 2, wherein the suppressing member is a protruding member protruding into the molding space from an inner surface of the mold body.

4. The mold according to claim 3, further comprising a plurality of the protruding members, wherein:
the pipe includes a first end, a second end lined up in a predetermined direction with the first end, and a middle portion positioned between the first end and the second end,
the middle portion includes a plurality of engaged portions lined up in the predetermined direction, and
the plurality of protruding members are respectively provided to be positioned between adjacent ones of the engaged portions when the pipe is placed in the molding space.

5. The mold according to claim 4, wherein the plurality of protruding members have an equal amount of protrusion to each other from the inner surface of the mold body.

6. The mold according to claim 4, wherein the amount of protrusion of a part of the plurality of protruding members from the inner surface of the mold body, and the amount of protrusion of another part of the plurality of protruding members from the inner surface of the mold body, are different from each other.

7. The mold according to claim 4, wherein an interval of tips of adjacent ones of the protruding members is wider than an interval between bases of the adjacent ones of the protruding members.

8. The mold according to claim 1, wherein the suppressing member is a recessed groove formed in the inner surface of the mold body.

9. The mold according to claim 8, wherein the recessed groove is formed to be capable of holding the pipe.

10. The mold according to claim 8, wherein:
the pipe includes a first end, a second end lined up in a predetermined direction with the first end, and a middle portion positioned between the first end and the second end,
the middle portion includes a plurality of engaged portions lined up in the predetermined direction, and
the recessed groove includes a plurality of engaging grooves allowing the engaged portions to be fit thereto when the pipe is placed in the molding space, the plurality of engaged portions being lined up in the predetermined direction.

11. The mold according to any one of claims 8 through 10, wherein:
the pipe has a circular cross-section, and
the recessed groove has a semi-circular cross-section.

12. The mold according to claim 1 or 2, further comprising a plurality of the suppressing members, wherein:
the mold body includes a first inner surface and a second inner surface facing the first inner surface,
a part of the plurality of suppressing members is provided at the first inner surface, and
another part of the plurality of suppressing members is provided at the second inner surface.

13. The mold according to claim 1 or 2, further comprising a plurality of the suppressing members, wherein:
a part of the plurality of suppressing members is provided at an inner surface of the fixed mold, and
another part of the plurality of suppressing members is provided at an inner surface of the movable mold.

14. The mold according to claim 13, wherein:
the mold body includes a core at least partially positioned between the fixed mold and the movable mold,
the molding space is defined by at least the fixed mold, the movable mold and the core, and
a part of the plurality of suppressing members is provided at an inner surface of the core.

15. The mold according to claim 1, wherein the suppressing member is detachably provided on the mold body.

16. The mold according to claim 1, wherein:
the fixed mold and the movable mold each include the suppressing member,
the suppressing member provided on the fixed mold is a protruding member protruding into the molding space from an inner surface of the fixed mold, and
the suppressing member provided in the movable mold is a recessed groove formed in an inner surface of the movable mold.

17. The mold according to claim 1, wherein:
the fixed mold and the movable mold each include the suppressing member,
the suppressing member provided in the fixed mold is a recessed groove formed in an inner surface of the fixed mold, and
the suppressing member provided on the movable mold is a protruding member protruding into the molding space from an inner surface of the movable mold.

18. The mold according to claim 1, wherein:
the pipe includes a first end, a second end lined up in a predetermined direction with the first end, and a middle portion positioned between the first end and the second end, and
the suppressing member is configured to suppress movement of the middle portion in the predetermined direction.

19. The mold according to claim 18, wherein the middle portion is formed to have a spiral shape extending in the predetermined direction.

20. The mold according to claim 18, wherein the middle portion is formed to have a wave-like shape extending in the predetermined direction.

21. The mold according to claim 18, wherein at least a tip portion of the suppressing member is formed to have a diameter decreasing toward a tip thereof.

22. The mold according to claim 1, wherein:
the pipe includes a first end, a second end lined up in a predetermined direction with the first end, and a middle portion positioned between the first end and the second end,
the middle portion is formed to have a spiral shape extending in the predetermined direction, and
the suppressing member is configured to suppress movement of the middle portion in a direction crossing the predetermined direction.

23. The mold according to claim 22, wherein the suppressing member is configured to suppress the movement of the middle portion in a direction perpendicularly crossing the predetermined direction.

24. The mold according to claim 22, wherein:
the suppressing member protrudes toward the pipe from an inner surface of the mold body, and
at least a tip portion of the suppressing member is formed to have a diameter decreasing toward a tip thereof.

25. The mold according to claim 22, wherein:
the mold body includes a slidable core extending in the predetermined direction and insertable into the middle portion,
the molding space is defined by at least the fixed mold, the movable mold and the slidable core, and
the suppressing member includes a protruding portion formed on an outer circumferential surface of the slidable core and protruding toward the middle portion.

26. The mold according to claim 25, wherein the protruding portion extends in the predetermined direction.

27. The mold according to claim 25, further comprising a discharge opening which is in communication with the injection opening and through which a molten metal material is discharged into the molding space,
wherein in a state where the middle portion has the slidable core inserted thereto, at least a part of the protruding portion is provided to face the discharge opening.

28. The mold according to claim 25, wherein:
the slidable core is formed to be cylindrical, and
a plurality of the protruding portions away from each other in a circumferential direction of the slidable core are formed on the outer circumferential surface of the slidable core.

29. The mold according to claim 25, wherein:
the suppressing member includes a protruding member protruding into the molding space from an inner surface of the mold body,
the protruding member is configured to suppress movement of the middle portion in the predetermined direction, and
in a state where the middle portion has the slidable core inserted thereto, as seen in the predetermined direction, the protruding portion is provided at a position facing at least a part of the protruding member.

30. The mold according to claim 25, wherein:
the suppressing member includes a first protruding member and a second protruding member protruding into the molding space from an inner surface of the mold body,
the first protruding member and the second protruding member protrude toward different portions in a circumferential direction of the middle portion, and are configured to suppress movement of the middle portion in the predetermined direction, and
in a state where the middle portion has the slidable core inserted thereto, as seen in the predetermined direction, the protruding portion is positioned between the first protruding member and the second protruding member in the circumferential direction of the middle portion.

31. A cast item production device, comprising:
a mold including a fixed mold, a movable mold movable toward, or away from, the fixed mold, a molding space defined by at least the fixed mold and the movable mold and allowing a pipe to be placed therein, an injection opening through which a molten metal material is allowed to be injected into the molding space, a holding portion holding both of two ends of the pipe, and a suppressing member suppressing movement of the pipe in the molding space when the molten metal material is injected into the molding space; and
a metal material transportation device injecting the molten metal material into the molding space through the injection opening.

32. A method for producing a cast item including a pipe and a metal member cast around the pipe, the method comprising:
a preparation step of preparing a mold including a fixed mold, a movable mold movable toward, or away from, the fixed mold, a molding space defined by at least the fixed mold and the movable mold and allowing the pipe to be placed therein, an injection opening through which a molten metal material is allowed to be injected into the molding space, a holding portion holding both of two ends of the pipe, and a suppressing member suppressing movement of the pipe in the molding space when the molten metal material is injected into the molding space;
a placement step of causing the pipe to be held by the holding portion and placing the pipe in the molding space such that the pipe is in contact with the suppressing member;
a mold clamping step of moving the movable mold toward the fixed mold to close the mold;
a filling step of injecting the molten metal material into the molding space through the injection opening to fill the molding space with the molten metal material; and
a removal step of moving the movable mold away from the fixed mold to open the mold and removing the cast item.

33. The method according to claim 32, further comprising a fluid filling step of, before the filling step, injecting a non-compressive fluid from one end of the pipe to fill the pipe with the non-compressive fluid.

34. The method according to claim 33, further comprising a discharge step of, before the removal step, discharging the non-compressive fluid filling the pipe.

35. The method according to claim 32, wherein:
the pipe is a hollow pipe, and
in the placement step, the pipe is caused to be held by the holding portion and is placed in the molding space.

36. A cast item, comprising:
a pipe; and
a metal member cast around the pipe,
wherein:
the pipe includes:
a first end,
a second end, and
a middle portion positioned between the first end and the second end,
the first end and the second end protrude outward from the metal member, and
a part of the middle portion is exposed outside from the metal member.

37. The cast item according to claim 36, wherein:
the first end and the second end are lined up in a predetermined direction, and
the middle portion includes a plurality of exposed portions exposed outside from the metal member and lined up in the predetermined direction.

38. The cast item according to claim 36, wherein:
the middle portion is formed to have a spiral shape and includes a curved portion curved in an arcked shape, and
a part of the curved portion is exposed outside from the metal member.

39. The cast item according to claim 38, wherein:
the first end and the second end are lined up in a predetermined direction, and
the middle portion includes a plurality of curved portions lined up in the predetermined direction.

40. The cast item according to claim 36, wherein:
the metal member includes a recessed portion formed in a surface thereof, and
a part of the middle portion is exposed outside in the recessed portion.

41. A cast item, comprising:
a pipe; and
a metal member cast around the pipe,
wherein:
the pipe includes:
a first end,
a second end lined up in a predetermined direction with the first end, and
a middle portion positioned between the first end and the second end,
the middle portion is formed to have a spiral shape extending in the predetermined direction, and
the metal member includes an inner circumferential surface positioned radially inner to the middle portion and a recessed portion recessed in a radially outward direction from the inner circumferential surface, as seen in the predetermined direction.

42. The cast item according to claim 41, wherein the recessed portion extends in the predetermined direction.

43. The cast item according to claim 42, wherein the recessed portion is opened in the predetermined direction at one of ends in the predetermined direction of the inner circumferential surface.

44. The cast item according to claim 43, wherein the recessed portion is opened in the predetermined direction at the other of the ends in the predetermined direction of the inner circumferential surface.

45. The cast item according to claim 41, wherein the metal member includes a plurality of the recessed portions lined up in the predetermined direction.

46. The cast item according to claim 45, wherein the recessed portions are formed to be circular as seen in a direction which perpendicularly crosses the predetermined direction and in which a straight line passing a center of each of the recessed portions extends.

47. The cast item according to claim 46, wherein the recessed portions are formed to have a diameter increasing from a radially outer side toward a radially inner side.

48. The cast item according to claim 41, wherein the metal member includes an outer circumferential surface positioned radially outer to the middle portion, and another recessed portion recessed in a radially inward direction from the outer circumferential surface, as seen in the predetermined direction.

49. The cast item according to claim 48, wherein the metal member includes a plurality of the another recessed portions lined up in the predetermined direction.

50. The cast item according to claim 49, wherein the another recessed portions are formed to be cylindrical as seen in a direction which perpendicularly crosses the predetermined direction and in which a straight line passing a center of each of the another recessed portions extends.

51. The cast item according to claim 50, wherein the another recessed portions are each formed to have a diameter increasing from a radially inner side toward a radially outer side.
